(19) Europäisches Patentamt / European Patent Office / Office européen des brevets

(11) **EP 4 759 837 A1**

(12) **EUROPEAN PATENT APPLICATION**
published in accordance with Art. 153(4) EPC

(43) Date of publication:
**17.06.2026 Bulletin 2026/25**

(21) Application number: **24851431.7**

(22) Date of filing: **24.06.2024**

(51) International Patent Classification (IPC):
*C08F 8/50* (2006.01)      *C08F 2/22* (2006.01)
*C08G 59/02* (2006.01)      *C08J 3/24* (2006.01)
*C08L 33/02* (2006.01)      *C08L 101/14* (2006.01)

(52) Cooperative Patent Classification (CPC):
**C08F 2/22; C08F 8/50; C08G 59/02; C08J 3/24;
C08L 33/02; C08L 101/14; Y02W 30/62**

(86) International application number:
**PCT/JP2024/022891**

(87) International publication number:
**WO 2025/032998 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.08.2023 JP 2023130231**

(71) Applicant: **Nippon Shokubai Co., Ltd.
Osaka-shi, Osaka 541-0043 (JP)**

(72) Inventors:
• **TORII, Kazushi
  Himeji-shi, Hyogo 671-1282 (JP)**

• **KOBAYASHI, Nobuhiro
  Himeji-shi, Hyogo 671-1282 (JP)**
• **MATSUI, Daisuke
  Himeji-shi, Hyogo 671-1282 (JP)**
• **ENOKIDA, Yusuke
  Himeji-shi, Hyogo 671-1282 (JP)**
• **NOGI, Kozo
  Himeji-shi, Hyogo 671-1282 (JP)**
• **FUJINO, Shinichi
  Himeji-shi, Hyogo 671-1282 (JP)**
• **ISHIZAKI, Kunihiko
  Himeji-shi, Hyogo 671-1282 (JP)**

(74) Representative: **Schön, Christoph
  Dr. Schön, Neymeyr & Partner mbB
  Bavariaring 26
  80336 München (DE)**

(54) **WATER-ABSORBING RESIN AND METHOD FOR PRODUCING SAME**

(57) An object of the present invention is to provide a technique for improving water absorption performance (especially, gel permeation rate) in production of a water-absorbent resin using a water-absorbent resin that should be originally discarded. A method for producing a water-absorbent resin, including: a step of obtaining a water-absorbent resin decomposition product (A) having 80 mass% or more of a water-soluble component, the step including decomposing a recovered water-absorbent resin; a step of obtaining a regenerated water-absorbent resin (C) having less than 80 mass% of a water-soluble component, the step including mixing the water-absorbent resin decomposition product (A) with a crosslinking agent (B) capable of reacting with the water-absorbent resin decomposition product (A); and incorporating the regenerated water-absorbent resin (C) and a water-absorbent resin (D) which is a water-absorbent resin other than the recovered water-absorbent resin, wherein a water-soluble content of the water-absorbent resin decomposition product (A) has a mass average molecular weight of 50000 or more and 700000 or less and a molecular weight distribution of 2.0 or more and 7.0 or less.

EP 4 759 837 A1

**Description**

Technical Field

The present invention relates to a water-absorbent resin and a method for producing the same.

Background Art

A water-absorbent resin (super absorbent polymer/SAP) is a water-swellable water-insoluble polymer gelling agent, and is used in various absorbent articles such as hygienic materials (sanitary articles) such as disposable diapers, sanitary napkins, adult incontinence products (incontinence pads), and pet sheets, soil water retaining agents for agriculture and horticulture, and water blocking agents for industrial use.

Among them, hygienic materials such as disposable diapers and sanitary napkins are main applications of the water-absorbent resin. These hygienic materials are discarded in large quantities as spent absorbent articles after a short period of use (about one day at the longest), and are incinerated.

In recent years, recycling of such spent absorbent articles has been attempted from the viewpoint of environmental protection and the like. For example, hygienic materials contain raw materials such as pulp, nonwoven fabric, and adhesives in addition to the above-described water-absorbent resin, and material recycling has been attempted in which these raw materials are separated from spent hygienic materials and reused. Furthermore, a technique of recycling a decomposition product of a water-absorbent resin obtained from a sanitary article to production of a water-absorbent resin has been developed (Patent Documents 1 and 2).

Citation List

Patent Document

Patent Document 1: WO 2020/213298 A
Patent Document 2: WO 2022/080342 A

Summary of Invention

Technical Problem

An object of the present invention is to provide a technique for improving water absorption performance (especially, gel permeation rate) in production of a water-absorbent resin using a water-absorbent resin that should be originally discarded, such as a water-absorbent resin contained in a spent absorbent article or a waste water-absorbent resin in a water-absorbent resin production step.

Solution to Problem

The above problem can be solved by a method for producing a water-absorbent resin, including: a step of obtaining a water-absorbent resin decomposition product (A) having 80 mass% or more of a water-soluble component, the step including decomposing a recovered water-absorbent resin; a step of obtaining a regenerated water-absorbent resin (C) having less than 80 mass% of a water-soluble component, the step including mixing the water-absorbent resin decomposition product (A) with a crosslinking agent (B) capable of reacting with the water-absorbent resin decomposition product (A); and incorporating the regenerated water-absorbent resin (C) and a water-absorbent resin (D), which is a water-absorbent resin other than the recovered water-absorbent resin, in which a water-soluble content of the water-absorbent resin decomposition product (A) has a mass average molecular weight of 50000 or more and 700000 or less and a molecular weight distribution of 2.0 or more and 7.0 or less.

Advantageous Effects of Invention

According to the present invention, a water-absorbent resin having improved water absorption performance (especially, gel permeation rate) can be produced by using a water-absorbent resin that should be originally discarded, such as a water-absorbent resin contained in an absorbent article such as a spent absorbent article, or a waste water-absorbent resin in a water-absorbent resin production step.

Brief Description of Drawings

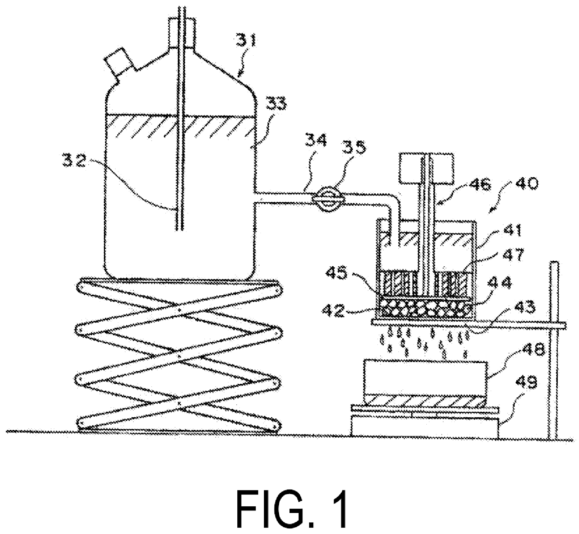

FIG. 1 is a schematic diagram showing an apparatus for measuring a gel permeation rate (GPR).

Description of Embodiments

Hereinafter, preferred embodiments of the present invention will be described. It should be noted that the present invention is not only limited to the following embodiments and can be variously modified within the scope of claims. The embodiments described in the present specification can be combined in any way to constitute another embodiment.

In the present specification, the term "(meth)acrylic" includes both acrylic and methacrylic. Thus, for example, the term "(meth)acrylic acid" includes both acrylic acid and methacrylic acid. In the present specification, the term "... acid (salt)" means "... acid and/or a salt thereof".

<1> Method for Producing Water-Absorbent Resin

In one aspect of the present invention, there is provided a method for producing a water-absorbent resin, including: a step of obtaining a water-absorbent resin decomposition product (A) having 80 mass% or more of a water-soluble component, the step including decomposing a recovered water-absorbent resin; a step of obtaining a regenerated water-absorbent resin (C) having less than 80 mass% of a water-soluble component, the step including mixing the water-absorbent resin decomposition product (A) with a crosslinking agent (B) capable of reacting with the water-absorbent resin decomposition product (A); and incorporating the regenerated water-absorbent resin (C) and a water-absorbent resin (D), which is a water-absorbent resin other than the recovered water-absorbent resin, in which a water-soluble content of the water-absorbent resin decomposition product (A) has a mass average molecular weight of 50000 or more and 700000 or less and a molecular weight distribution of 2.0 or more and 7.0 or less. According to such an aspect, a water-absorbent resin having improved water absorption performance (especially, gel permeation rate) can be produced by using a water-absorbent resin that should be originally discarded, such as a water-absorbent resin contained in an absorbent article such as a spent absorbent article, or a waste water-absorbent resin in a water-absorbent resin production step.

[1] Step of Obtaining Water-Absorbent Resin Decomposition Product (A) Having 80 mass% or More of Water-Soluble Component, Step Including Decomposing Recovered Water-Absorbent Resin

(1-1) Water-Absorbent Resin

First, the "water-absorbent resin" as the target product will be described. The "water-absorbent resin" is a water-swellable water-insoluble polymer gelling agent, and without any limitations, refers to a common water-absorbent resin having a fluid retention capacity of 10 times or more and 1000 times or less. More specifically, the water-absorbent resin before absorbing a liquid to be absorbed preferably satisfies a property in which CRC is 5 g/g or more as the "water swellability". The definition of CRC will be described later.

The water-absorbent resin may be a polymer derived from a carboxyl group-containing unsaturated monomer. The water-absorbent resin may contain a polymer having partially neutralized carboxyl groups. Specific examples of the water-absorbent resin include a polyacrylic acid (salt)-based resin, a polysulfonic acid (salt)-based resin, a maleic anhydride (salt)-based resin, a polyacrylamide-based resin, a polyvinyl alcohol-based resin, a polyethylene oxide-based resin, a polyaspartic acid (salt)-based resin, a polyglutamic acid (salt)-based resin, a polyalginic acid (salt)-based resin, a starch-based resin, a cellulose-based resin, a (meth)acrylate cross-linked polymer, a saponified cross-linked product of a (meth)acrylate-vinyl acetate copolymer, a starch-acrylate graft polymer, and a cross-linked product thereof. The mass of the water-absorbent resin is a value in terms of solid content unless otherwise specified.

In the present specification, the water-absorbent resin is not limited to an aspect in which the total amount (100 mass%) consists of only the water-absorbent resin, and may be a water-absorbent resin composition containing an additive or the like.

(1-2) Recovered Water-Absorbent Resin

The "recovered water-absorbent resin" as a raw material of the water-absorbent resin decomposition product (A) will be described. The "recovered water-absorbent resin" means a "water-absorbent resin" that should be originally discarded. Specifically, there is a water-absorbent resin contained in a spent absorbent article (for example, a water-absorbent resin that has absorbed body fluids such as urine and blood in a spent absorbent article), and a waste water-absorbent resin in a water-absorbent resin production step (for example, a fine powder or out-of-specification product of a water-absorbent resin generated in a water-absorbent resin production step). From the viewpoint of environmental protection and the like, it is preferable to use the water-absorbent resin recovered (taken out and collected) from spent absorbent articles, among them. That is, in one embodiment of the present invention, the recovered water-absorbent resin is recovered from a spent absorbent article.

The recovered water-absorbent resin is not limited to an aspect in which the total amount (100 mass%) consists of only the water-absorbent resin, but it may be a water-absorbent resin composition containing a fibrous material, a nonwoven fabric, an adhesive, an additive, and the like. When the recovered water-absorbent resin is contained in a spent absorbent article, the recovered water-absorbent resin may be in a state of a hydrogel in which water such as urine water is incorporated. When the recovered water-absorbent resin is in the form of a water-absorbent resin composition, the recovered water-absorbent resin may contain, for example, from 1 to 10 mass% of components other than the water-absorbent resin.

The mass of the recovered water-absorbent resin is a value in terms of solid content unless otherwise specified. Note that, for example, when the mass of the water-absorbent resin contained in a spent absorbent article (for example, a spent disposable diaper) is unknown, the mass of the recovered water-absorbent resin is calculated using the mass of the water-absorbent resin contained in an unspent absorbent article (for example, an unspent disposable diaper) and a general value of the fluid retention capacity of the water-absorbent resin in the spent absorbent article (for example, the spent disposable diaper), or the mass of the recovered water-absorbent resin is measured by assuming that a content (in terms of solid content) of the water-absorbent resin with respect to a total mass of the spent absorbent article (for example, the spent disposable diaper) is 1 mass% or more and 9 mass% or less (in particular, 3 mass% or more and 5 mass% or less).

(1-3) Absorbent Article and Spent Absorbent Article

The "absorbent article" is a hygienic material used for water absorption. The "spent absorbent article" refers to a spent hygienic material that has absorbed body fluids such as urine and blood. Examples of the hygienic material include disposable diapers, sanitary napkins, and adult incontinence products (incontinence pads). Examples of articles similar to the hygienic material include pet sheets and pet diapers. In the present invention, these animal urine disposal articles are also included in the hygienic material. The absorbent article includes, for example, an absorbent body containing a water-absorbent resin and a fibrous material, a surface sheet having liquid permeability, and a back sheet having liquid impermeability. The absorbent body can be produced by blending a water-absorbent resin and a fibrous material, or sandwiching a water-absorbent resin between fibrous materials and molding the resulting material into a film shape, a cylindrical shape, a sheet shape, or the like. Examples of the fibrous material include hydrophilic fibers such as ground wood pulp, cotton linters, crosslinked cellulose fibers, rayon, cotton, wool, acetate, and vinylon.

(1-4) Water-Absorbent Resin Decomposition Product (A)

The method for producing a water-absorbent resin according to one aspect of the present invention includes decomposing a recovered water-absorbent resin to obtain a water-absorbent resin decomposition product (A) (sometimes referred to simply as "decomposition product" in the present specification). The recovered water-absorbent resin may be reduced in particle size by pulverizing with reference to the method described in the "Pulverizing Step" described later, before being subjected to the decomposition reaction. The particle size is suitably, for example, 300 $\mu$m or less, 160 $\mu$m or less, 120 $\mu$m or less, 80 $\mu$m or less, or 60 $\mu$m or less. A lower limit of the particle size is suitably, for example, 20 $\mu$m or more. The water-absorbent resin decomposition product (A) is a product produced by decomposing a water-swellable (that is, water-insoluble) recovered water-absorbent resin, and is solubilized in water. The phrase "solubilized in water" may mean a solubilized product which is completely solubilized in water or a partially solubilized product which is partially not solubilized in water, but in this aspect, 80 mass% or more of the water-absorbent resin decomposition product (A) is composed of a water-soluble component. In one embodiment of the present invention, the water-absorbent resin decomposition product (A) has more than 80 mass%, 85 mass% or more, 90 mass% or more, or 95 mass% or more (an upper limit is 100 mass%) of a water-soluble component. If the amount of the water-soluble component of the water-absorbent resin decomposition product (A) is less than 80 mass%, there is a possibility that mixing (A) with the crosslinking agent (B) becomes difficult, that the gel permeation rate of the resulting water-absorbent resin deteriorates, and the like. In the present specification, the "water-soluble component" is sometimes referred to as "water-soluble content", and the concentration thereof is determined by the method described in Examples.

In one embodiment of the present invention, a main component of the water-absorbent resin decomposition product (A) is polyacrylic acid (salt). The phrase "contain (acrylic acid (salt)) as a main component" means that an amount of acrylic acid (salt) used is typically 50 mol% or more and 100 mol% or less, preferably 70 mol% or more and 100 mol% or less, more preferably 90 mol% or more and 100 mol% or less, and still more preferably substantially 100 mol% with respect to the whole monomers (provided that an internal crosslinking agent is excluded) used for polymerization of polyacrylic acid (salt).

In one embodiment of the present invention, the water-soluble content of the water-absorbent resin decomposition product (A) has a mass average molecular weight of 50000 or more and 700000 or less, 70000 or more and 700000 or less, 100000 or more and 650000 or less, 150000 or more and 650000 or less, 150000 or more and 600000 or less, or 200000 or more and 600000 or less. When the mass average molecular weight of the water-soluble content of the water-absorbent resin decomposition product (A) is less than 50000, there is a possibility that the gel permeation rate deteriorates. When the mass average molecular weight of the water-soluble content of the water-absorbent resin decomposition product (A) is more than 700000, there is a possibility that uniform mixing of the crosslinking agent becomes difficult, or that the gel permeation rate deteriorates due to such difficulty. The mass average molecular weight of the water-soluble content of the water-absorbent resin decomposition product (A) can be measured by the method described in the section of Examples.

In one embodiment of the present invention, the water-soluble content of the water-absorbent resin decomposition product (A) has a molecular weight distribution (Mw/Mn) in a range of 2.0 or more and 7.0 or less, 2.0 or more and 6.5 or less, 2.0 or more and 6.0 or less, 2.0 or more and 5.0 or less, 2.1 or more and 4.5 or less, 2.2 or more and 4.5 or less, 2.2 or more and 4.0 or less, 2.3 or more and 3.5 or less, or 2.4 or more and 3.0 or less. It is difficult to stably obtain the water-absorbent resin decomposition product (A) in which the molecular weight distribution (Mw/Mn) of the water-soluble content is less than 2.0, and there is a possibility that the performance is not stable. When the molecular weight distribution (Mw/Mn) of the water-soluble content of the water-absorbent resin decomposition product (A) is more than 7.0, there is a possibility that the gel permeation rate deteriorates. The molecular weight distribution (Mw/Mn) of the water-soluble content of the water-absorbent resin decomposition product (A) can be measured by the method described in the section of Examples.

In one embodiment of the present invention, the water-absorbent resin decomposition product (A) may contain water, and, in this case, a solid content concentration of the water-absorbent resin decomposition product (A) may be 1 mass% or more and less than 100 mass%, 2 mass% or more and 99 mass% or less, 3 mass% or more and 98 mass% or less, 4 mass% or more and 97 mass% or less, 5 mass% or more and 95 mass% or less, or 10 mass% or more and 90 mass% or less. A solid content of the water-absorbent resin decomposition product (A) is determined from a mass change when 1 g of the water-absorbent resin decomposition product is heated at 180°C for 3 hours. In one embodiment of the present invention, when the water-absorbent resin decomposition product (A) contains water, the solid content concentration is, for example, 30 mass% or less, 25 mass% or less, or 22 mass% or less. In this embodiment, the water-absorbent resin decomposition product (A) is also referred to as being in the form of an aqueous solution. In one embodiment of the present invention, when the water-absorbent resin decomposition product (A) contains water, the solid content concentration is, for example, 70 mass% or more, 75 mass% or more, or 78 mass% or more. In this embodiment, the water-absorbent resin decomposition product (A) is also referred to as being in the form of a powder.

In one embodiment of the present invention which is more excellent in productivity, the solid content concentration of the mixture containing the recovered water-absorbent resin, water, and the decomposing agent is preferably 60 mass% or more and less than 100 mass%, more preferably 70 mass% or more and less than 100 mass%, and still more preferably 80 mass% or more and less than 100 mass%. In the present invention, when the solid content concentration of the mixture containing the water-absorbent resin, which is to be subjected to a heat treatment, is set to be high (60 mass% or more), a solid content amount of the resulting water-absorbent resin decomposition product (A) becomes large. Therefore, the energy required for drying can be significantly reduced.

In one embodiment of the present invention, a YI value of the water-absorbent resin decomposition product (A) is preferably 20 or less, more preferably 15 or less, still more preferably 10 or less, particularly preferably 5 or less, and most preferably 4 or less. When the YI value is 20 or less, even if a water-absorbent resin is produced using the decomposition product as a raw material, coloring of the water-absorbent resin is suppressed. In one embodiment of the present invention, the YI value of the water-absorbent resin decomposition product (A) may be practically 1 or more.

In one embodiment of the present invention, a pH of the water-absorbent resin decomposition product (A) is from 1 to 12, from 5 to 11, from 6 to 10, from 7 to 10, or from 6 to 9.

In one embodiment of the present invention, various methods can be used as a method for obtaining the water-absorbent resin decomposition product (A) by decomposing the recovered water-absorbent resin, provided that the resulting water-absorbent resin decomposition product (A) has 80 mass% or more of a water-soluble component, and that the mass average molecular weight and molecular weight distribution (Mw/Mn) of a water-soluble content of the water-absorbent resin decomposition product (A) are as described above. For example, they can be controlled by appropriately adjusting an amount of the decomposing agent, a temperature at the time of decomposition, a decomposition time, and the like within the ranges described in the present application.

For example, there can be used: a technique of heat treatment in the presence of hydrogen peroxide as a decomposing agent (for example, JP 04-317785 A); a technique of using ascorbic acid which is a reducing agent as a decomposing agent under conditions of pH 4 or more and pH 7.5 or less (for example, JP 05-247221 A); a technique of decomposition using a reducing agent and a transition metal ion as decomposing agents (for example, JP 2019-131789 A); a technique of decomposition by heating in the presence of an oxidative water-soluble salt as a decomposing agent (for example, WO2021/042113 A); a technique of decomposition using ozone water as a decomposing agent (for example, JP 2017-100133 A); a technique of decomposition using an oxidizing agent and a transition metal ion such as an iron ion or a copper ion in combination as decomposing agents (for example, JP 11-172039 A); a technique of decomposition using an alkali compound as a decomposing agent (for example, JP 2020-49398 A); and the like.

In one embodiment of the present invention, an oxidizing agent may be used as the decomposing agent as described above. The oxidizing agent is a compound having oxidizing properties, and is a compound that generates a radical upon heating. Examples of the oxidizing agent include persulfates such as sodium persulfate, potassium persulfate, and ammonium persulfate; peroxides such as hydrogen peroxide, alkyl hydroperoxides, and peresters; perchlorates such as sodium perchlorate and potassium perchlorate; periodates such as sodium periodate and potassium periodate; percarbonates; perborates; and peracetic acid. These oxidizing agents may be used alone, or two or more thereof may be used in combination. Among these, hydrogen peroxide is suitably used. That is, in one embodiment of the present invention, the water-absorbent resin decomposition product (A) is a product of decomposition by a peroxide.

In one embodiment of the present invention, a reducing agent may be used as the decomposing agent as described above. The reducing agent is a compound having reducing properties, and is a compound that generates a radical when used in combination with an oxidizing agent or a compound that produces a transition metal ion. Examples of the reducing agent include sulfurous acid (salt), hydrogen sulfite (salt), phosphorous acid (salt), hypophosphorous acid (salt), thiosulfuric acid (salt), formic acid, oxalic acid, erythorbic acid, amine, ascorbic acid (salt) and derivatives thereof (for example, L-ascorbic acid (salt), isoascorbic acid (salt), and alkyl ester of ascorbic acid), phosphoric ester, and sulfuric ester. The reducing agents may be used alone, or two or more thereof may be used in combination.

In one embodiment of the present invention, as described above, a transition metal ion may be used as the decomposing agent. Examples of the transition metal ion include $Cu^{2+}$, $Ag^+$, $Fe^{2+}$, $Fe^{3+}$, $Al^{3+}$, $Ni^{2+}$, and $Mn^{2+}$. The transition metal ions may be used alone, or two or more thereof may be used in combination. Examples of the compound that produces a transition metal ion as described above include chlorides and hydrates thereof, such as ferrous chloride: organic acid salts and hydrates thereof, such as ferrous fumarate, ferrous oxalate, ferrous chloride, sodium ferrous citrate, ferrous gluconate, ferrous citrate, and ferrous acetate: sulfates and hydrates thereof, such as ferrous sulfate.

In one embodiment of the present invention, as described above, an alkali compound may be used as the decomposing agent. The alkali compound is a compound that solubilizes the recovered water-absorbent resin upon alkali hydrolysis of a crosslinked portion of the recovered water-absorbent resin. Examples of such an alkali compound include hydroxides of alkali metals such as lithium hydroxide, potassium hydroxide, and sodium hydroxide; hydroxides of alkaline earth metals such as magnesium hydroxide and calcium hydroxide; ammonia; and amine compounds such as aliphatic amines, alicyclic amines, and aromatic amines. The alkali compounds may be used alone, or two or more thereof may be used in combination. In one embodiment of the present invention, the decomposing agent includes an oxidizing agent and an alkali compound.

In one embodiment of the present invention, a pH of the mixture containing the recovered water-absorbent resin, water, and the decomposing agent is adjusted to be in a range of 6.5 or more and 8.5 or less, 7.0 or more and 8.5 or less, or 7.5 or more and 8.5 or less. When the pH is within this range, decomposability can be improved, or coloring of the decomposition product can be suppressed. However, the pH of the mixture is preferably adjusted to fall within the range for a certain period of time during which decomposition of the recovered water-absorbent resin sufficiently proceeds, and more preferably adjusted to fall within the above pH range for a period from the start of decomposition to the end of decomposition. The pH of the mixture can be adjusted by adding a pH adjuster such as an acid or a base as necessary. Examples of the acid to be used include inorganic acids such as hydrochloric acid, sulfuric acid, nitric acid, and phosphoric acid, and organic acids such as acetic acid and citric acid. Examples of the base that can be used include bases such as sodium hydroxide, sodium carbonate, potassium hydroxide, and magnesium hydroxide. The pH can be measured by the method described in Examples.

In one embodiment of the present invention, an amount of the decomposing agent used (a total amount of two or more decomposing agents when used in combination) is 0.001 parts by mass or more and 60 parts by mass or less, 0.003 parts by mass or more and 50 parts by mass or less, or 0.004 parts by mass or more and 40 parts by mass or less, in terms of active components, with respect to 100 parts by mass of the recovered water-absorbent resin.

In one embodiment of the present invention, a temperature at which the recovered water-absorbent resin is decomposed is 50°C or higher and 250°C or lower, 60°C or higher and 250°C or lower, 80°C or higher and 240°C or lower, 100°C or higher and 230°C or lower, or 120°C or higher and 210°C or lower. In one embodiment of the present invention, the temperature at which the recovered water-absorbent resin is decomposed is 100°C or lower. As a method for adjusting the temperature, the mixing may be performed at room temperature, and then the temperature may be set to a predetermined temperature (for example, a container filled with the mixture may be immersed in an oil bath at a predetermined temperature. A method for setting the temperature to the predetermined temperature is not particularly limited, and a known method such as a steam jacket may be used). Alternatively, the recovered water-absorbent resin, water, and the like warmed to a predetermined temperature may be mixed, and the mixture may be kept at the temperature.

In one embodiment of the present invention, a time for decomposing the recovered water-absorbent resin can be 0.1 hours or more and 6 hours or less, 0.1 hours or more and 4 hours or less, 0.2 hours or more and 2 hours or less, or 0.3 hours or more and 1 hour or less.

In one embodiment of the present invention, the step of obtaining the water-absorbent resin decomposition product (A) includes a heat treatment step of subjecting a mixture containing a recovered water-absorbent resin, water, and a decomposing agent to a heat treatment under conditions satisfying the following i) and ii), that is, i) a solid content concentration of the mixture is 60 mass% or more; and ii) a temperature of the heat treatment is 60°C or higher. In one embodiment of the present invention, the solid content concentration in i) is preferably 60 mass% or more and less than 100 mass%, more preferably 70 mass% or more and less than 100 mass%, and still more preferably 80 mass% or more and less than 100 mass%. In one embodiment of the present invention, the temperature of the heat treatment in ii) is 60°C or higher and 250°C or lower, 80°C or higher and 240°C or lower, 100°C or higher and 230°C or lower, 120°C or higher and 220°C or lower, or 140°C or higher and 210°C or lower. In one embodiment of the present invention, the time of the heat treatment in ii) may be 0.1 hours or more and 6 hours or less, 0.15 hours or more and 4 hours or less, 0.2 hours or more and 3 hours or less, or 0.3 hours or more and 2 hours or less.

In one embodiment of the present invention, in order to reduce a residual amount of a peroxide (for example, hydrogen peroxide) in the water-absorbent resin decomposition product (A), an additive such as sodium carbonate may be added, and the mixture may be stirred, for example, at 10°C or higher and 40°C or lower for 1 hour or more and 10 hours or less. The residual hydrogen peroxide amount can be measured by the method described in Examples.

In one embodiment of the present invention, a shearing force is applied to the recovered water-absorbent resin before the recovered water-absorbent resin is decomposed and/or during a period from the start of the decomposition to the end of the decomposition, whereby the particle size of the recovered water-absorbent resin can be reduced. When the particle size of the recovered water-absorbent resin is reduced, a surface area of the recovered water-absorbent resin is increased, and the time required to obtain a decomposition product can be shortened. The particle size of the recovered water-absorbent resin may be reduced for either the recovered water-absorbent resin in a dry state (maintaining equilibrium with atmospheric humidity) or the recovered water-absorbent resin in a water-containing state. A crushing apparatus used when applying a shearing force to the recovered water-absorbent resin to reduce the particle size thereof is not particularly limited. When the recovered water-absorbent resin is in a dry state (maintaining equilibrium with atmospheric humidity), a jaw crusher, a cone crusher, an impact crusher, a roll crusher, an autogenous grinder, a stamp mill, a stone mill type grinder, a mortar mill, a ring mill, a roller mill, a jet mill, a pin mill, a vibration mill, a planetary mill, a bead mill, an attritor, a hammer mill, a cutter mill or the like can be used. When the recovered water-absorbent resin is in a water-containing gel state, a gel grinding apparatus equipped with a plurality of rotary stirring blades such as a batch-type or continuous-type double-arm kneader, a single-screw extruder, a twin-screw extruder, a meat chopper, a disper, a homomixer, a colloid mill, a roll mill, a high-pressure jet disperser, a rotary mill, a vibration mill, a planetary mill, an attritor, a bead mill or the like can be used.

In one embodiment of the present invention, an apparatus for producing a decomposition product is not particularly limited as long as it is an apparatus capable of decomposing while maintaining desired decomposition conditions, and examples thereof include a tank-type decomposition apparatus, a decomposition apparatus equipped with a stirrer, and a multi-shaft decomposition apparatus. The inner wall surface of the decomposition apparatus is preferably made of a corrosion-resistant (acid resistance, alkali resistance) material from the viewpoint of reducing the maintenance frequency of the apparatus and maintaining the performance. Examples of such a corrosion-resistant material include stainless steel, Hastelloy steel, titanium steel, glass-lined steel, resin-lined steel, and metal spray coated steel. Examples of the stainless steel include austenitic stainless steels such as SUS304, SUS304L, SUS304LN, SUS312L, SUS316, SUS316L, SUS316N, SUS316LN, SUS317, SUS317N, and SUS317LN; ferritic stainless steel such as SUS430, SUS430F, SUS434, and SUS444; and martensitic stainless steel such as SUS410, SUS410F2, SUS410J1, SUS410S, and SUS431. Examples of the resin-lined steel include those lined with rubber, fluororesins (polytetrafluoroethylene, perfluoroalkoxy alkane, perfluoroethylene propylene copolymer, ethylene tetrafluoroethylene copolymer, polyvinylidene fluoride, and the like), and thermosetting resins (epoxy resin, bisphenol type polyester, vinyl ester, and the like). Examples of the metal spray coated steel include those coated with metal or ceramic by flame spraying, high-speed flame spraying, arc spraying, plasma spraying, or a wire blast method. The lining or coating may be applied to the entire apparatus or may be applied only to a portion where corrosion is particularly likely to occur (such as a gas-liquid interface). Examples of measures for suppressing corrosion other than the use of a corrosion-resistant material include periodic washing of the apparatus with water, sufficient stirring or standing before heating when adding an acid or an alkali to make the pH of the solution uniform, and removal of oxygen in the solution (inert gas replacement, degassing, use of a deoxidizer, and the like). A container made of a resin such as polypropylene may be used as an apparatus for producing a decomposition product.

[2] Step of Obtaining Regenerated Water-Absorbent Resin (C) Having Less Than 80 mass% of Water-Soluble Component, Step Including Mixing Water-Absorbent Resin Decomposition Product (A) and Crosslinking Agent (B) Capable of Reacting with Water-Absorbent Resin Decomposition Product (A)

This step includes crosslinking the water-absorbent resin decomposition product (A) to obtain a regenerated water-absorbent resin (C). By using the regenerated water-absorbent resin (C) in the production of a water-absorbent resin in a subsequent step, a water-absorbent resin in which a decrease in gel permeation rate is particularly suppressed can be obtained.

(2-1) Crosslinking Agent (B)

The method includes reacting the decomposition product (A) obtained by decomposing the recovered water-absorbent resin with a crosslinking agent (B) to obtain a regenerated water-absorbent resin (C). In one embodiment of the present invention, the crosslinking agent (B) contains a compound having in one molecule, two or more functional groups capable of reacting with a carboxyl group. Examples of the functional group include an epoxy group and a hydroxy group.
Examples of the compound having an epoxy group include ethylene glycol diglycidyl ether, polyethylene glycol diglycidyl ether, glycerol polyglycidyl ether, diglycerol polyglycidyl ether, polyglycerol polyglycidyl ether, propylene glycol diglycidyl ether, polypropylene glycol polyglycidyl ether, glycidol, sorbitol polyglycidyl ether, pentaerythritol polyglycidyl ether, trimethylolpropane polyglycidyl ether, neopentyl glycol diglycidyl ether, and 1,6-hexanediol diglycidyl ether. Examples of the compound having a hydroxy group include (poly)glycerin, (poly)ethylene glycol, propylene glycol, 1,3-propanediol, polyoxyethylene glycol, triethylene glycol, tetraethylene glycol, diethanolamine, and triethanolamine.
In one embodiment of the present invention, the crosslinking agent (B) may be appropriately selected from an "internal crosslinking agent" and a "surface crosslinking agent" as disclosed in the present specification. Preferably, the compound having an epoxy group is used as the crosslinking agent (B). One of more preferable methods is a method of using ethylene glycol diglycidyl ether as the crosslinking agent (B). One of the most preferable methods is a method of using ethylene glycol diglycidyl ether and propylene glycol in combination as the crosslinking agent (B).

(2-2) Regenerated Water-Absorbent Resin (C)

The regenerated water-absorbent resin (C) is obtained by mixing and reacting the water-absorbent resin decomposition product (A) and the crosslinking agent (B) capable of reacting with the water-absorbent resin decomposition product (A). Uniform mixing can improve the gel permeation rate of the water-absorbent resin. The obtained regenerated water-absorbent resin (C) may be in the form of a hydrogel or in the form of a powder.
Examples of a method for uniform mixing include a method of mechanically stirring with an apparatus having a high shearing force, a method of mixing with an apparatus that generates turbulent flow, such as a venturi tube or a static mixer, and a method of mixing a powder and a liquid by air flow mixing or mechanical stirring when the water-absorbent resin decomposition product (A) or the crosslinking agent (B) is a powder.
In one embodiment of the present invention, the regenerated water-absorbent resin (C) may be obtained by mixing and reacting the water-absorbent resin decomposition product (A) and the crosslinking agent (B) to obtain a regenerated water-absorbent resin, and further mixing and reacting the regenerated water-absorbent resin with a crosslinking agent. That is, the crosslinking reaction is not limited to being performed in one stage, and may be performed in a plurality of stages. The number of stages is not particularly limited, but is preferably four or less, or three or less in consideration of productivity. The conditions for the crosslinking reaction at this time are independent of each other in each stage. As specific reaction conditions, conditions in the reaction between the water-absorbent resin decomposition product (A) and the crosslinking agent (B) described later can be applied.
In one embodiment of the present invention, a surfactant may be added in the crosslinking reaction between the regenerated water-absorbent resin and the crosslinking agent. The addition of the surfactant exhibits an effect of suppressing stickiness of the mixture. Examples of the surfactant include one or more compounds selected from nonionic substances, amphoteric substances, anionic substances, and cationic substances. Suitably, the nonionic substance is (a) a polyol, (b) a modified product of a hydroxy group of a polyol, (c) a side chain and/or terminal polyether-modified polysiloxane, or (d) an alkylene oxide adduct of a higher aliphatic amine; the amphoteric substance is (e) an alkylaminobetaine such as lauryldimethylaminoacetic acid betaine or (f) an alkylamine oxide; the anionic substance is (g) a sulfuric ester salt of a higher alcohol alkylene oxide adduct or (h) an alkyldiphenyl ether disulfonate; the cationic substance is (i) an ammonium salt. In one embodiment of the present invention, an amount of the surfactant to be added is, for example, suitably from 0.01 to 5 parts by mass, from 0.1 to 3 parts by mass, or from 0.2 to 2 parts by mass, with respect to 100 parts by mass of the regenerated water-absorbent resin.
In one embodiment of the present invention, a mixing ratio of the crosslinking agent (B) to the solid content of the water-absorbent resin decomposition product (A) is suitably 0.001 mass% or more and 10 mass% or less, 0.01 mass% or more and 8 mass% or less, or 0.1 mass% or more and 5 mass% or less.

In one embodiment of the present invention, when the water-absorbent resin decomposition product (A) is in the form of an aqueous solution, the aqueous solution and the crosslinking agent (B) may be mixed and reacted. In one embodiment of the present invention, when the water-absorbent resin decomposition product (A) is in the form of a powder, water may be added as appropriate, and the water-absorbent resin decomposition product (A) may be mixed and reacted with the crosslinking agent (B). In one embodiment of the present invention, when the water-absorbent resin decomposition product (A) is in the form of a powder, in order to control the particle size of the water-absorbent resin decomposition product (A) to a desired particle size, the water-absorbent resin decomposition product (A) may be ground with reference to the method described in the "Pulverizing Step" later, water may be added as appropriate, and the mixture may be mixed and reacted with the crosslinking agent (B). Examples of an apparatus used in the grinding include high-speed rotary grinders such as a roll mill, a hammer mill, a screw mill, and a pin mill, a vibration mill, a knuckle-type grinder, and a cylindrical mixer. These apparatuses are used in combination as necessary. Examples of a method for controlling the particle size to a desired particle size include sieve classification and air flow classification using JIS standard sieves (JIS Z8801-1 (2000)). The particle size in the present embodiment is suitably controlled to be, for example, 300 μm or less, 200 μm or less, 180 μm or less, or 150 μm or less. A lower limit of the particle size is suitably, for example, 20 μm or more.

In one embodiment of the present invention, when the water-absorbent resin decomposition product (A) is in the form of an aqueous solution, the aqueous solution and the crosslinking agent (B) may be mixed and reacted with an organic solvent (dispersed in an organic solvent). Examples of the organic solvent include aliphatic hydrocarbons such as n-hexane, n-heptane, and ligroin; alicyclic hydrocarbons such as cyclopentane, methylcyclopentane, cyclohexane, and methylcyclohexane; and aromatic hydrocarbons such as benzene, toluene, and xylene. These organic solvents may each be used alone, or two or more thereof may be mixed and used.

In one embodiment of the present invention, the regenerated water-absorbent resin (C) is obtained by mixing the water-absorbent resin decomposition product (A) and the crosslinking agent (B), and reacting them by heating. In one embodiment of the present invention, the (mixture containing the) crosslinking agent (B) is heated to 40°C or higher, 60°C or higher, 80°C or higher, 100°C or higher, 120°C or higher, 140°C or higher, or 160°C or higher. In one embodiment of the present invention, an upper limit of the heating temperature is, for example, 200°C or lower, 150°C or lower, or 110°C or lower. Although the reaction time can be shortened by increasing the temperature, when the heating is performed in the form of an aqueous solution, the temperature is preferably adjusted so as not to exceed a boiling point of the aqueous solution.

In one embodiment of the present invention, the heating time is, for example, 0.01 hours or more and 10 hours or less, 0.1 hours or more and 5 hours or less, or 0.2 hours or more and 3 hours or less.

In one embodiment of the present invention, when a reaction product obtained by mixing the water-absorbent resin decomposition product (A) and the crosslinking agent (B) is in the form of a hydrogel, gel grinding may be performed before mixing with a water-absorbent resin (D) described later. Examples of the gel grinding apparatus used in the gel grinding include screw extruders such as a kneader and a meat chopper, and a cutter mill. A particulate hydrogel obtained by the gel grinding may be dried to a desired resin solid content. Examples of a drying method include heat drying, hot air drying, reduced pressure drying, fluidized bed drying, infrared drying, microwave drying, and drum dryer drying. A drying temperature is suitably 120°C or higher and 250°C or lower, or 130°C or higher and 200°C or lower. A drying time is suitably 0.01 hours or more and 3 hours or less, or 0.017 hours or more and 2 hours or less, or further 0.17 hours or more and 1 hour or less. A dried polymer obtained by the drying may be ground and classified. Examples of an apparatus used in the grinding include high-speed rotary grinders such as a roll mill, a hammer mill, a screw mill, and a pin mill, a vibration mill, a knuckle-type grinder, and a cylindrical mixer. These apparatuses are used in combination as necessary. Examples of a classification method include sieve classification and air flow classification using JIS standard sieves (JIS Z8801-1 (2000)). A particle size of the classified regenerated water-absorbent resin (C) is suitably 1000 μm or less, or 900 μm or less.

In one embodiment of the present invention, when the reaction product obtained by mixing the water-absorbent resin decomposition product (A) and the crosslinking agent (B) is in the form of a hydrogel, the reaction product may be dried by azeotropic dehydration in an organic solvent, for example, an aliphatic hydrocarbon such as n-hexane, n-heptane, or ligroin; an alicyclic hydrocarbon such as cyclopentane, methylcyclopentane, cyclohexane, or methylcyclohexane; or an aromatic hydrocarbon such as benzene, toluene, or xylene. Thereafter, the organic solvent may be removed by filtration or the like, and further, for example, drying may be performed by heat drying, hot air drying, reduced pressure drying, fluidized bed drying, infrared drying, microwave drying, drum dryer drying, or the like at 120°C or higher and 250°C or lower, or 130°C or higher and 200°C or lower for 0.01 hours or more and 3 hours or less, or 0.017 hours or more and 2 hours or less, or further 0.17 hours or more and 1 hour or less. The dried polymer obtained by the drying may be ground and classified. Examples of an apparatus used in the grinding include high-speed rotary grinders such as a roll mill, a hammer mill, a screw mill, and a pin mill, a vibration mill, a knuckle-type grinder, and a cylindrical mixer. These apparatuses are used in combination as necessary. Examples of a classification method include sieve classification and air flow classification using JIS standard sieves (JIS Z8801-1 (2000)). A particle size of the classified regenerated water-absorbent resin (C) is suitably 1000 $\mu$m or less, or 900 $\mu$m or less.

By mixing and reacting the water-absorbent resin decomposition product (A) and the crosslinking agent (B), the amount of the water-soluble component of the resulting regenerated water-absorbent resin (C) is low, i.e., less than 80 mass%. Here, when the amount of the water-soluble component of the regenerated water-absorbent resin (C) is 80 mass% or more, there is a possibility that the GPR of the resulting water-absorbent resin is lowered. In one embodiment of the present invention, the amount of the water-soluble component (water-soluble content amount) of the regenerated water-absorbent resin (C) is 75 mass% or less, 70 mass% or less, 65 mass% or less, 60 mass% or less, 55 mass% or less, or 45 mass% or less. In one embodiment of the present invention, the water-soluble component (water-soluble content amount) of the regenerated water-absorbent resin (C) is, for example, 5 mass% or more, 10 mass% or more, or 15 mass% or more.

In order to control the water-soluble component of the regenerated water-absorbent resin (C) to less than 80 mass%, it is preferable to appropriately adjust the amount of the crosslinking agent (B), the concentration of the aqueous solution (or the water content percentage) of the water-absorbent resin decomposition product (A), the reaction temperature, the reaction time, and the like when the water-absorbent resin decomposition product (A) and the crosslinking agent (B) are reacted.

In one embodiment of the present invention, a solid content of the regenerated water-absorbent resin (C) is 5 mass% or more and 100 mass% or less, 8 mass% or more and 98 mass% or less, or 10 mass% or more and 95 mass% or less. In one embodiment of the present invention, the solid content of the regenerated water-absorbent resin (C) is 60 mass% or more, 70 mass% or more, 80 mass% or more, 90 mass% or more, or 95 mass% or more.

In one embodiment of the present invention, the water-soluble content of the regenerated water-absorbent resin (C) has a mass average molecular weight of 50000 or more and 700000 or less, 100000 or more and 650000 or less, or 150000 or more and 600000 or less. When the mass average molecular weight of the water-soluble content of the regenerated water-absorbent resin (C) is less than 50000, there is a possibility that the gel permeation rate deteriorates. When the mass average molecular weight of the water-soluble content of the regenerated water-absorbent resin (C) is more than 700000, there is a possibility that gel strength is insufficient. Examples of a method for controlling the mass average molecular weight of the water-soluble content of the regenerated water-absorbent resin (C) include adjusting the water-absorbent resin decomposition product (A) within the range indicated in the present application, and appropriately adjusting the amount of the crosslinking agent (B), the concentration of the aqueous solution (or the water content percentage) of the water-absorbent resin decomposition product (A), the reaction temperature, the reaction time, and the like.

[3] Step of Incorporating Regenerated Water-Absorbent Resin (C) and Water-Absorbent Resin (D) which Is Water-Absorbent Resin Other than Recovered Water-Absorbent Resin

In one embodiment of the present invention, a "water-absorbent resin" is newly produced by reacting a decomposition product (A) obtained by decomposing a recovered water-absorbent resin with a crosslinking agent (B) to obtain a regenerated water-absorbent resin (C), and using the regenerated water-absorbent resin (C) as at least a part of a raw material and using a water-absorbent resin (D) as at least a part of a raw material to incorporate them.

In one embodiment of the present invention, in a newly produced water-absorbent resin, the regenerated water-absorbent resin (C) and the water-absorbent resin (D) may be present in a separated form, that is, in the form of a mixture, or the regenerated water-absorbent resin (C) may be added in at least one step in production steps of the water-absorbent resin (D), or the like, and thus the water-absorbent resin (D) and the regenerated water-absorbent resin (C) may be present in a chemically bonded form. For example, when a water-absorbent resin powder obtained through a step of producing the water-absorbent resin (D) (drying step) and the regenerated water-absorbent resin (C) are mixed and "surface crosslinking" is performed in a subsequent step, the water-absorbent resin (D) and the regenerated water-absorbent resin (C) are in a chemically bonded form. The same results can be obtained by mixing the hydrogel obtained through a step of producing the water-absorbent resin (D) (polymerization step) with the regenerated water-absorbent resin (C) and performing "surface crosslinking" in a subsequent step. The same results can be obtained by mixing the regenerated water-absorbent resin (C) with an aqueous monomer solution in steps of producing the water-absorbent resin (D) (preparation step of an aqueous monomer solution and polymerization step), and performing "polymerization", or by performing "surface crosslinking" in a subsequent step. The same results can be obtained by mixing the particulate hydrogel obtained through a step of producing the water-absorbent resin (D) (gel grinding step) with the regenerated water-absorbent resin (C) and performing "surface crosslinking" in a subsequent step. On the other hand, when the water-absorbent resin particles obtained through a step of producing the water-absorbent resin (D) (surface crosslinking step) and the regenerated water-absorbent resin (C) are mixed, the regenerated water-absorbent resin (C) and the water-absorbent resin (D) are in a separated form, that is, in the form of a mixture. The concept that the water-absorbent resin "contains the regenerated water-absorbent resin (C) and the water-absorbent resin (D)" includes not only a form in which the water-absorbent resin contains a simple mixture of the water-absorbent resin (D) and the regenerated water-absorbent resin (C) but also a form in which the regenerated water-absorbent resin (C) is chemically bonded to the water-absorbent resin (D) (the regenerated water-absorbent resin (C) is chemically incorporated into the water-absorbent resin (D)) by adding the regenerated water-absorbent resin (C) in at least one step in production steps of the water-absorbent resin (D).

The production of the "water-absorbent resin" of one embodiment of the present invention includes, for example, in the production of the water-absorbent resin (D) by polymerizing a monomer containing fresh acrylic acid (salt), using the regenerated water-absorbent resin (C) as a part of a raw material thereof. A form of polymerization applied to one embodiment of the present invention is not particularly limited, and examples thereof include a spray droplet polymerization method, an aqueous solution polymerization method, and an inverse suspension polymerization method. Examples of the aqueous solution polymerization method include a continuous aqueous solution polymerization method, and specifically, either a continuous belt polymerization method or a continuous kneader polymerization method may be used. The continuous belt polymerization method is disclosed in US 4893999 B, US 6241928 B, US 2005/215734 A, and the like, and the continuous kneader polymerization method is disclosed in US 6987151 B, US 6710141 B, and the like.

In one embodiment of the present invention, the aqueous solution polymerization method may include at least one step of a preparation step of an aqueous monomer solution, a polymerization step, a hydrogel grinding step, a drying step (a pulverizing step and a classification step), a fine powder granulation step, and a surface crosslinking step. In one embodiment of the present invention, the regenerated water-absorbent resin (C) is mixed in at least one step of producing the water-absorbent resin (D) by the aqueous solution polymerization method. In one embodiment of the present invention, the water-absorbent resin is produced by utilizing the inverse suspension polymerization method. In one embodiment of the present invention, the inverse suspension polymerization method includes heating an aqueous monomer solution, a surfactant and/or a polymeric protective colloid, a polymerization initiator and an internal crosslinking agent in an organic solvent under stirring. In one embodiment of the present invention, the regenerated water-absorbent resin (C) is mixed in at least one step of producing the water-absorbent resin (D) by the inverse suspension polymerization method.

Hereinafter, an embodiment will be described in which, in producing the water-absorbent resin (D) by using the aqueous solution polymerization method, the regenerated water-absorbent resin (C) is mixed in at least one step of the production method to produce a water-absorbent resin containing the water-absorbent resin (D) and the regenerated water-absorbent resin (C).

In one embodiment of the present invention, when the solid content of the regenerated water-absorbent resin (C) is 80 mass% or more, the regenerated water-absorbent resin (C) is mixed in at least one step of the preparation step of an aqueous monomer solution, the polymerization step, the hydrogel grinding step, the drying step (the pulverizing step and the classification step), and the fine powder granulation step, and is preferably mixed in at least one step of the drying step (the pulverizing step and the classification step) and the fine powder granulation step. In the present specification, the solid content of the regenerated water-absorbent resin (C) is determined from a loss on drying (mass change when 1 g of the regenerated water-absorbent resin (C) is heated at 180°C for 3 hours).

In one embodiment of the present invention, when the solid content of the regenerated water-absorbent resin (C) is less than 80 mass%, the regenerated water-absorbent resin (C) is mixed in at least one step of the preparation step of an aqueous monomer solution, the polymerization step, the hydrogel grinding step, the drying step (the pulverizing step and the classification step), and the fine powder granulation step, is preferably mixed in at least one step of the preparation step of an aqueous monomer solution, the polymerization step (followed by the pulverizing step and the classification step), the hydrogel grinding step, and the fine powder granulation step, and is more preferably mixed in at least one step of the polymerization step and the hydrogel grinding step.

The mixing of the regenerated water-absorbent resin (C) may be performed in the middle of each step, or may be performed on a resultant product obtained in each step, or these may be used in combination. These fall under the category of "mixing in at least one step". For example, a water-absorbent resin powder is obtained as a resultant product through the drying step (the pulverizing step and the classification step). The water-absorbent resin powder may be mixed with the regenerated water-absorbent resin (C). In addition, for example, a hydrogel is obtained as a resultant product through the polymerization step. The hydrogel may be mixed with the regenerated water-absorbent resin (C). This mixture can be ground simultaneously in the hydrogel grinding step. Alternatively, for example, the regenerated water-absorbent resin (C) may be mixed in the middle of preparing the aqueous monomer solution. In addition, for example, a particulate hydrogel is obtained as a resultant product through the hydrogel grinding step. The particulate hydrogel may be mixed with the regenerated water-absorbent resin (C).

In one embodiment of the present invention, when a total of the amounts of the regenerated water-absorbent resin (C) and the water-absorbent resin (D) is 100 parts by mass, an amount of the regenerated water-absorbent resin (C) is suitably 3 parts by mass or more and less than 100 parts by mass, 5 parts by mass or more and less than 100 parts by mass, or 10 parts by mass or more and less than 100 parts by mass. In the present specification, the water-absorbent resin (D) may mean a precursor of the water-absorbent resin (D), and examples of the precursor include a monomer, a hydrogel, a particulate hydrogel, and a water-absorbent resin powder. In a case where the regenerated water-absorbent resin (C) is mixed in the middle of preparing the aqueous monomer solution, the amount of the regenerated water-absorbent resin (C) may be set in consideration of the solid content of the resulting hydrogel, that is, when the total of the amount of the regenerated water-absorbent resin (C) and the solid content of the resulting hydrogel is 100 parts by mass, the amount of the regenerated water-absorbent resin (C) may be set to 3 parts by mass or more and 100 parts by mass or less, 5 parts by mass or more and 100 parts by mass or less, or 10 parts by mass or more and 100 parts by mass or less.

Hereinafter, an embodiment of each step of producing the "water-absorbent resin" by incorporating the step of mixing the regenerated water-absorbent resin (C) in producing the water-absorbent resin (D) by polymerizing a fresh acrylic acid (salt) as a monomer will be described.

(3-1) Preparation Step of Aqueous Monomer Solution

This step is a step of preparing an aqueous solution containing an acrylic acid (salt) as a main component (hereinafter referred to as "aqueous monomer solution"). The "main component" means that an amount (content) of acrylic acid (salt) used is typically 50 mol% or more, preferably 70 mol% or more, and more preferably 90 mol% or more (upper limit: 100 mol%), with respect to the whole monomers (excluding the internal crosslinking agent) to be subjected to the polymerization reaction of the water-absorbent resin.

Acrylic Acid

In one embodiment of the present invention, acrylic acid and/or a salt thereof (hereinafter referred to as "acrylic acid (salt)") is used as a monomer constituting the water-absorbent resin. The "acrylic acid" may be a known acrylic acid, and contains preferably a methoxyphenol, more preferably p-methoxyphenol, as a polymerization inhibitor, in an amount of preferably 200 mass ppm or less, more preferably 10 mass ppm or more and 160 mass ppm or less, and still more preferably 20 mass ppm or more and 100 mass ppm or less, from the viewpoint of the polymerizability of acrylic acid and the color tone of the water-absorbent resin.

The "acrylic acid salt" is obtained by neutralizing the acrylic acid with the following basic composition, and the acrylic acid salt may be a commercially available acrylic acid salt (for example, sodium acrylate), or may be obtained by neutralization in a water-absorbent resin production plant.

Basic Composition

In one embodiment of the present invention, the "basic composition" refers to a composition containing a basic compound, such as an aqueous sodium hydroxide solution. Specific examples of the basic compound include alkali metal salts such as carbonates and/or hydrogen carbonates of alkali metals, and hydroxides of alkali metals such as sodium hydroxide, potassium hydroxide, and lithium hydroxide. Examples of the basic compound other than these include ammonia and organic amines. Among these, from the viewpoint of the physical properties of the resulting water-absorbent resin, a strongly basic compound is preferable. For example, hydroxides of alkali metals such as sodium hydroxide, potassium hydroxide, and lithium hydroxide are preferable, and sodium hydroxide is more preferable.

Neutralization

As the neutralization in one embodiment of the present invention, either the neutralization of acrylic acid (before polymerization) or the neutralization of a crosslinked hydrogel polymer obtained by crosslinking polymerization of acrylic acid (after polymerization) (hereinafter referred to as "post-neutralization") can be selected, or both can be used in combination. When the regenerated water-absorbent resin (C) is used in the production of a water-absorbent resin, if the regenerated water-absorbent resin (C) has a neutralizing function, a neutralization percentage of the water-absorbent resin as a final product may be prepared to a predetermined range in consideration of the neutralizing function. In addition, these neutralizations may be performed continuously or batchwise, and are not particularly limited, but are preferably performed continuously from the viewpoint of production efficiency and the like. Regarding conditions such as the apparatus for performing neutralization, the neutralization temperature, and the residence time, the conditions described in WO 2009/123197 A, US 2008/0194863 A, and the like are also applied to the present invention.

The neutralization percentage in one embodiment of the present invention is preferably 10 mol% or more and 90 mol% or less, more preferably 40 mol% or more and 85 mol% or less, still more preferably 50 mol% or more and 80 mol% or less, and particularly preferably 60 mol% or more and 75 mol% or less, in consideration of the absorption capacity without pressure and the gel permeation rate, with respect to acid groups of the monomer. For example, the "neutralization percentage of 75 mol%" means a mixture of 25 mol% of acrylic acid and 75 mol% of an acrylic acid salt. In addition, the mixture may be referred to as a partially neutralized acrylic acid.

12

The neutralization percentage may be the same even in the case of the post-neutralization. The neutralization percentage is also applied to the neutralization percentage of the water-absorbent resin as a final product.

Other Monomers

In one embodiment of the present invention, the "other monomers" refer to monomers other than the acrylic acid (salt), and the water-absorbent resin can be produced by using the other monomers in combination with the acrylic acid (salt). Examples of the other monomers include water-soluble or hydrophobic unsaturated monomers. Specifically, the compounds disclosed in US 2005/0215734 A (excluding acrylic acid) are also applied to one embodiment of the present invention.

Internal Crosslinking Agent

As the internal crosslinking agent used in one embodiment of the present invention, the compounds disclosed in US 6241928 are also applied to one embodiment of the present invention. Among these, one or more compounds are selected in consideration of reactivity. From the viewpoint of water absorption performance of the resulting water-absorbent resin, the internal crosslinking agent used is preferably a compound having two or more polymerizable unsaturated groups, more preferably a compound having thermal degradability at the following drying temperature, and still more preferably a compound having two or more polymer unsaturated groups having a (poly)alkylene glycol structural unit. The polymerizable unsaturated group is preferably an allyl group or a (meth)acrylate group, and more preferably a (meth)acrylate group. The (poly)alkylene glycol structural unit is preferably polyethylene glycol, and the number of moles added (n number) is preferably 1 or more and 100 or less, and more preferably 6 or more and 50 or less.

An amount of the internal crosslinking agent used is preferably 0.0001 mol% or more and 10 mol% or less, and more preferably 0.001 mol% or more and 1 mol% or less with respect to the whole monomers.

In one embodiment of the present invention, a method is preferably applied in which a predetermined amount of an internal crosslinking agent is added previously to an aqueous monomer solution, and crosslinking reaction is performed simultaneously with polymerization.

Other Substances to Be Added to Aqueous Monomer Solution

In one embodiment of the present invention, the following substances can be added during preparation of the aqueous monomer solution. Specifically, addition of a hydrophilic polymer such as starch, a starch derivative, cellulose, a cellulose derivative, polyvinyl alcohol, polyacrylic acid (salt), or a polyacrylic acid (salt) crosslinked body at preferably 50 mass% or less, more preferably 20 mass% or less, still more preferably 10 mass% or less, and particularly preferably 5 mass% or less (lower limit is 0 mass%); addition of at least one of a carbonate, an azo compound, a foaming agent such as air bubbles, a surfactant, a chelating agent, a chain transfer agent, and the like at preferably 5 mass% or less, more preferably 1 mass% or less, and still more preferably 0.5 mass% or less (a lower limit is 0 mass%), and the like can be performed.

In one embodiment of the present invention, the chelating agent is at least one compound selected from the group consisting of an amino polycarboxylic acid and an amino polyphosphoric acid. The term "poly-" means that a plurality of functional groups are present in one molecule, and the number of functional groups is preferably 2 or more and 30 or less, more preferably 3 or more and 20 or less, and still more preferably 4 or more and 10 or less. A molecular weight of the chelating agent is preferably 100 or more and 5000 or less, and more preferably 150 or more and 1000 or less, from the viewpoint of the influence on polymerization and the physical properties of the resulting water-absorbent resin. Specific examples of the amino polycarboxylic acid include iminodiacetic acid, hydroxyethyliminodiacetic acid, nitrilotriacetic acid, nitrilotripropionic acid, ethylenediaminetetraacetic acid, diethylenetriaminepentaacetic acid, triethylenetetraaminehexaacetic acid, trans-1,2-diaminocyclohexanetetraacetic acid, N,N-bis(2-hydroxyethyl)glycine, diaminopropanoltetraacetic acid, ethylenediaminedipropionic acid, N-hydroxyethylethylenediaminetriacetic acid, glycol etherdiaminetetraacetic acid, diaminopropanetetraacetic acid, N,N'-bis(2-hydroxybenzyl)ethylenediamine-N,N'-diacetic acid, 1,6-hexamethylenediamine-N,N,N',N'-tetraacetic acid, and salts thereof. As the salt, a sodium salt, a potassium salt, and the like are suitable.

The substance may be added not only in the form of being added to the aqueous monomer solution, but also in the form of being added in the middle of polymerization, and both forms may be used in combination.

In one embodiment of the present invention, the regenerated water-absorbent resin (C) is mixed in the aqueous monomer solution.

(3-2) Polymerization Step

This step is a step of polymerizing an acrylic acid (salt)-based aqueous monomer solution obtained in the preparation step of an aqueous monomer solution to provide a crosslinked hydrogel polymer (hereinafter, referred to as "hydrogel").

Polymerization Initiator

Polymerization initiator used in one embodiment of the present invention is appropriately selected in accordance with a form of polymerization and the like and is not particularly limited. Examples of the polymerization initiator include a thermally decomposable polymerization initiator, a photodecomposable polymerization initiator, or a redox-based polymerization initiator in which a reducing agent that accelerates the decomposition of these polymerization initiators is used in combination. Specifically, one, or two or more of the polymerization initiators disclosed in US 7265190 B is/are used. From the viewpoint of the handleability of the polymerization initiator, the physical properties of the water-absorbent resin, and the like, a peroxide or an azo compound is preferably used, a peroxide is more preferably used, and a persulfate is still more preferably used. An amount of the polymerization initiator used is preferably 0.001 mol% or more and 1 mol% or less, and more preferably 0.001 mol% or more and 0.5 mol% or less with respect to the monomer. An amount of the reducing agent used is preferably 0.0001 mol% or more and 0.02 mol% or less with respect to the monomer. Instead of using the polymerization initiator, the polymerization reaction may be performed by irradiating active energy rays such as radiation, an electron beam, and an ultraviolet ray, or these active energy rays and the polymerization initiator may be used in combination.

Form of Polymerization

The form of polymerization applied to one embodiment of the present invention is not particularly limited, but from the viewpoints of water absorption properties, ease of polymerization control, and the like, preferable examples thereof include spray droplet polymerization, aqueous solution polymerization, and reverse phase suspension polymerization, more preferable examples thereof include aqueous solution polymerization and inverse suspension polymerization, and further preferable examples thereof include aqueous solution polymerization. Among them, continuous aqueous solution polymerization is particularly preferable, and either continuous belt polymerization or continuous kneader polymerization is applied. As specific forms of polymerization, continuous belt polymerization is disclosed in US 4893999, US 6241928, US 2005/215734, and the like, and continuous kneader polymerization is disclosed in US 6987151, US 6710141, and the like. Adopting these forms of the continuous aqueous solution polymerization improves the production efficiency of the water-absorbent resin.

Preferable forms of the continuous aqueous solution polymerization include "high-temperature initiation polymerization" and "high-concentration polymerization". The "high-temperature initiation polymerization" refers to a form in which polymerization is initiated with the temperature of the aqueous monomer solution set to 30°C or higher, 35°C or higher, 40°C or higher, or 50°C or higher (an upper limit is boiling point). The "high-concentration polymerization" refers to a form in which polymerization is performed with a monomer concentration set to preferably 30 mass% or more, more preferably 35 mass% or more, still more preferably 40 mass% or more, and particularly preferably 45 mass% or more (an upper limit is saturation concentration). These forms of polymerization can also be used in combination.

In one embodiment of the present invention, a hydrogel is obtained by polymerizing an aqueous monomer solution containing the regenerated water-absorbent resin (C).

(3-3) Hydrogel Grinding Step

This step is a step of subjecting the hydrogel obtained in the polymerization step to gel grinding using, for example, a screw extruder such as a kneader or a meat chopper, or a gel grinding apparatus such as a cutter mill to obtain a hydrogel in particulate form (hereinafter, referred to as "particulate hydrogel"). When the polymerization step is kneader polymerization, the polymerization step and the gel grinding step are performed simultaneously. When a particulate hydrogel is directly obtained in the polymerization process, for example, in gas phase polymerization or inverse suspension polymerization, the gel grinding step is not performed in some cases. With respect to gel grinding conditions and forms other than those described above, the contents disclosed in WO 2011/126079 A are preferably applied to the present invention.

In one embodiment of the present invention, the regenerated water-absorbent resin (C) and the hydrogel are mixed while being ground. In the present embodiment, a mixing ratio of the regenerated water-absorbent resin (C) to the hydrogel is suitably 5 parts by mass or more and 90 parts by mass or less, 10 parts by mass or more and 80 parts by mass or less, or 20 parts by mass or more and 60 parts by mass or less for the regenerated water-absorbent resin (C) when the total of the proportions of the regenerated water-absorbent resin (C) and the hydrogel solid content is 100 parts by mass. In the present embodiment, the mixing ratio of the regenerated water-absorbent resin (C) to the hydrogel is 30 parts by mass or less, 25 parts by mass or less, 20 parts by mass or less, 15 parts by mass or less, or 13 parts by mass or less for the regenerated water-absorbent resin (C) when the total of the proportions of the regenerated water-absorbent resin (C) and the hydrogel solid content is 100 parts by mass. In the present embodiment, the mixing ratio of the regenerated water-absorbent resin (C) to the hydrogel is 1 part by mass or more, 3 parts by mass or more, 5 parts by mass or more, 7 parts by mass or more, or 9 parts by mass or more for the regenerated water-absorbent resin (C) when the total of the proportions of the regenerated water-absorbent resin (C) and the hydrogel solid content is 100 parts by mass.

(3-4) Drying Step

This step is a step of producing a dried polymer by drying the particulate hydrogel produced in the polymerization step and/or the hydrogel grinding step to a desired resin solid content. The resin solid content is determined from the loss on drying (mass change when 1 g of the water-absorbent resin is heated at 180°C for 3 hours), and is preferably 80 mass% or more, more preferably 85 mass% or more and 99 mass% or less, still more preferably 90 mass% or more and 98 mass% or less, and particularly preferably 92 mass% or more and 97 mass% or less.

A method for drying the particulate hydrogel is not particularly limited, and examples thereof include heat drying, hot air drying, reduced pressure drying, fluidized bed drying, infrared drying, microwave drying, drum dryer drying, drying through azeotropic dehydration with a hydrophobic organic solvent, and high humidity drying using high temperature water vapor. Among these, from the viewpoint of drying efficiency, hot air drying is preferable, and band drying in which hot air drying is performed on a ventilation belt is more preferable. As a dryer, a ventilation dryer is suitable.

The drying temperature (temperature of hot air) in the hot air drying is preferably 120°C or higher and 250°C or lower, and more preferably 150°C or higher and 200°C or lower from the viewpoint of the color tone, drying efficiency, and the like of the water-absorbent resin. Drying conditions other than the drying temperature, such as hot air speed and drying time, may be appropriately set according to the water content percentage and total mass of the particulate hydrogel to be dried and the target resin solid content. When band drying is performed, various conditions described in WO 2006/100300 A, WO 2011/025012 A, WO 2011/025013 A, WO 2011/111657 A, and the like, are appropriately applied.

In one embodiment of the present invention, a mixture of the regenerated water-absorbent resin (C) to the particulate hydrogel is dried. In the present embodiment, a mixing ratio of the regenerated water-absorbent resin (C) to the particulate hydrogel is suitably 5 parts by mass or more and 90 parts by mass or less, 10 parts by mass or more and 80 parts by mass or less, or 20 parts by mass or more and 60 parts by mass or less for the regenerated water-absorbent resin (C) when the total of the proportions of the regenerated water-absorbent resin (C) and the particulate hydrogel solid content is 100 parts by mass. In the present embodiment, the mixing ratio of the regenerated water-absorbent resin (C) to the particulate hydrogel is 30 parts by mass or less, 25 parts by mass or less, 20 parts by mass or less, 15 parts by mass or less, or 13 parts by mass or less for the regenerated water-absorbent resin (C) when the total of the proportions of the regenerated water-absorbent resin (C) and the particulate hydrogel solid content is 100 parts by mass. In the present embodiment, the mixing ratio of the regenerated water-absorbent resin (C) to the particulate hydrogel is 1 part by mass or more, 3 parts by mass or more, 5 parts by mass or more, 7 parts by mass or more, or 9 parts by mass or more for the regenerated water-absorbent resin (C) when the total of the proportions of the regenerated water-absorbent resin (C) and the hydrogel solid content is 100 parts by mass.

(3-5) Pulverizing Step and Classification Step

This step is a step of pulverizing the dried polymer obtained in the drying step (pulverizing step) and adjusting the particle size to a predetermined range (classification step) to obtain a water-absorbent resin powder (a powdery water-absorbent resin before subjected to surface crosslinking is sometimes referred to as "water-absorbent resin powder").

Examples of an apparatus used in the pulverizing step of the present invention include high-speed rotary grinders such as a roll mill, a hammer mill, a screw mill, and a pin mill, a vibration mill, a knuckle-type grinder, and a cylindrical mixer. These apparatuses are used in combination as necessary.

A particle size adjustment method in the classification step of the present invention is not particularly limited, and examples thereof include sieve classification using a JIS standard sieve (JIS Z8801-1 (2000)) and air flow classification. Note that the particle size of the water-absorbent resin is not limited to adjustment during the pulverizing step and/or the classification step, and may also be appropriately adjusted during the polymerization step (particularly, inverse suspension polymerization or spray droplet polymerization) or other steps. It is also possible to remove an out-of-specification product (for example, a fine powder) classified in the classification step, and the removed water-absorbent resin powder may be used as the water-absorbent resin powder to be recovered.

The mass average particle size (D50) of the water-absorbent resin powder obtained in the above-described step (the water-absorbent resin powder before the surface crosslinking step, which is so-called a base polymer) is preferably 200 $\mu$m or more and 600 $\mu$m or less, more preferably 200 $\mu$m or more and 550 $\mu$m or less, and still more preferably 250 $\mu$m or more and 500 $\mu$m or less. The proportion of particles having a particle size of less than 150 $\mu$m is 10 mass% or less, 5 mass% or less, or 1 mass% or less. The proportion of particles having a particle size of 850 $\mu$m or more is 5 mass% or less, 3 mass% or less, or 1 mass% or less. In either case, the smaller the lower limit of the proportion of these particles, the more preferable it is, and the lower limit is desirably 0 mass% and may be about 0.1 mass%. Further, the logarithmic standard deviation ($\sigma\zeta$) of the particle size distribution is preferably 0.20 or more and 0.50 or less, more preferably 0.25 or more and 0.40 or less, and still more preferably 0.27 or more and 0.35 or less. Note that the particle size is measured using a standard sieve in accordance with the measurement method disclosed in US 7638570 B or NWSP 220.0. R2 (15).

The above-described particle size can be applied not only to the water-absorbent resin after subjected to surface crosslinking (hereinafter, sometimes referred to as "water-absorbent resin particles" for convenience) but also to the water-absorbing agent as a final product. Therefore, the water-absorbent resin particles are preferably subjected to a surface crosslinking treatment (surface crosslinking step) so as to maintain the particle size within the above-described range, and may be subjected to particle size adjustment by providing a sizing step (grinding and classification steps) after the "surface crosslinking step".

In one embodiment of the present invention, the CRC is 25 g/g or more, 27 g/g or more, 30 g/g or more, or 40 g/g or more, as a water absorption property of the water-absorbent resin powder. In one embodiment of the present invention, the water-absorbent resin powder has an AAP (0.3 psi) of 20 g/g or more, or 25 g/g or more, as a water absorption property of the water-absorbent resin powder. In one embodiment of the present invention, the CRC is 60 g/g or less, or 50 g/g or less, as a water absorption property of the water-absorbent resin powder. In one embodiment of the present invention, the water-absorbent resin powder has an AAP (0.3 psi) of 40 g/g or less, or 35 g/g or less, as a water absorption property of the water-absorbent resin powder.

In one embodiment of the present invention, the regenerated water-absorbent resin (C) and the water-absorbent resin powder are mixed. In the present embodiment, the mixing ratio of the regenerated water-absorbent resin (C) to the water-absorbent resin powder is suitably 3 parts by mass or more and less than 100 parts by mass, 5 parts by mass or more and less than 100 parts by mass, or 10 parts by mass or more and less than 100 parts by mass for the regenerated water-absorbent resin (C) when the total of the proportions of the regenerated water-absorbent resin (C) and the water-absorbent resin powder is 100 parts by mass. In the present embodiment, the mixing ratio of the regenerated water-absorbent resin (C) to the water-absorbent resin powder is 60 parts by mass or less, 50 parts by mass or less, 40 parts by mass or less, or 30 parts by mass or less for the regenerated water-absorbent resin (C) when the total of the proportions of the regenerated water-absorbent resin (C) and the water-absorbent resin powder is 100 parts by mass. In the present embodiment, the mixing ratio of the regenerated water-absorbent resin (C) to the water-absorbent resin powder is 1 part by mass or more, 3 parts by mass or more, 5 parts by mass or more, 7 parts by mass or more, or 9 parts by mass or more for the regenerated water-absorbent resin (C) when the total of the proportions of the regenerated water-absorbent resin (C) and the water-absorbent resin powder is 100 parts by mass.

(3-6) Fine Powder Granulation Step

This step is a step of granulating the fine powder classified in the "classification step" or the fine powder obtained in the above-described sizing step. The granulated product obtained in this step may be suitably recycled during the production steps.

The granulation means that particles are adhered to each other by a physical or chemical method to form particles larger than the original particles. The granulation is preferably performed by a solvent such as water or a hydrophilic solvent. Examples of the solvent include water; alcohols such as methyl alcohol, ethyl alcohol, n-propyl alcohol, isopropyl alcohol, n-butyl alcohol, isobutyl alcohol, and t-butyl alcohol; and combinations thereof. The solvent is preferably water. In the granulation, the solvent is used preferably by a method of spraying or dropping onto the fine powder, and more preferably by a method of spraying. An amount of the solvent is in a range of typically 25 parts by mass or more and 250 parts by mass or less, and preferably 25 parts by mass or more and 200 parts by mass or less, with respect to 100 parts by mass of the solid content of the water-absorbent resin fine powder, although the amount depends on the water content percentage of the fine powder to be used.

(3-7) Surface Crosslinking Step

This step is a step of further providing a portion having a higher crosslinking density on a surface layer (a portion extending several tens of micrometers inward from the surface) of the water-absorbent resin powder (and the regenerated water-absorbent resin (C), when the regenerated water-absorbent resin (C) is mixed) obtained through the above-described steps. This step is composed of a mixing step, a heat treatment step, and a cooling step (optional).

In the surface crosslinking step, a surface-crosslinked water-absorbent resin (water-absorbent resin particles) is produced by radical crosslinking on the surface, surface polymerization, a crosslinking reaction with a surface crosslinking agent, or the like.

Surface Crosslinking Agent

The surface crosslinking agent used in one embodiment of the present invention is not particularly limited, and examples thereof include an organic or inorganic surface crosslinking agent. Among these, an organic surface crosslinking agent that reacts with a carboxyl group is preferable from the viewpoint of the physical properties of the water-absorbent resin, the handleability of the surface crosslinking agent, and the like. For example, one or two or more types of the surface crosslinking agents disclosed in US 7183456 B can be used. More specific examples include: a polyhydric alcohol compound; an epoxy compound; a haloepoxy compound; a polyamine compound or a condensate thereof with the haloepoxy compound; an oxazoline compound; an oxazolidinone compound; a polyvalent metal salt; an alkylene carbonate compound; and a cyclic urea compound. As the surface crosslinking agent, specific examples of the "crosslinking agent (B)" are also suitable. The surface crosslinking agent may be a polyvalent metal compound containing a water-soluble polyvalent metal cation such as aluminum sulfate.

An amount of the surface crosslinking agent used (a total amount used when a plurality of the surface crosslinking agents are used) is preferably 0.01 parts by mass or more and 10 parts by mass or less, and more preferably 0.01 parts by mass or more and 5 parts by mass or less, with respect to 100 parts by mass of the water-absorbent resin powder (containing the regenerated water-absorbent resin (C)). In addition, the surface crosslinking agent is preferably added as an aqueous solution, and in this case, an amount of water used is preferably 0.1 parts by mass or more and 20 parts by mass or less, and more preferably 0.5 parts by mass or more and 10 parts by mass or less, with respect to 100 parts by mass of the water-absorbent resin powder (containing the regenerated water-absorbent resin (C)). Further, when a hydrophilic organic solvent is used as necessary, the amount of the organic solvent used is preferably 10 parts by mass or less, and more preferably 5 parts by mass or less, with respect to 100 parts by mass of the water-absorbent resin powder (containing the regenerated water-absorbent resin (C)).

Mixing Step

This step is a step of mixing the surface crosslinking agent. The method for mixing the surface crosslinking agent is not particularly limited, and examples thereof include a method of preparing a surface crosslinking agent solution previously, and preferably spraying or dropping, more preferably spraying the solution for mixing. An apparatus for the mixing is not particularly limited, and a high-speed stirring type mixer is preferable, and a high-speed stirring type continuous mixer is more preferable.

Heat Treatment Step

This step is a step in which heat is applied to the mixture discharged from the mixing step to induce a crosslinking reaction on the surface of the water-absorbent resin powder (and the regenerated water-absorbent resin (C), when the regenerated water-absorbent resin (C) is mixed with the water-absorbent resin powder).

The apparatus for performing the crosslinking reaction is not particularly limited, but a paddle dryer is preferable. The reaction temperature in the crosslinking reaction is appropriately set according to the type of the surface crosslinking agent to be used, and is preferably 50°C or higher and 300°C or lower, and more preferably 60°C or higher and 200°C or lower.

Cooling Step

This cooling step is an optional step provided, as necessary, after the heat treatment step. The apparatus for performing the cooling is not particularly limited and is preferably an apparatus having the same specification as the apparatus used in the heat treatment step, and more preferably a paddle dryer. This is because the heat medium can be changed to a refrigerant and thus used as a cooling apparatus. In the cooling step, the water-absorbent resin particles produced in the heat treatment step are forcibly cooled to preferably 40°C or higher and 80°C or lower, more preferably 50°C or higher and 70°C or lower as necessary.

(3-8) Water-Insoluble Inorganic Particles

The water-absorbent resin of the present invention preferably further contains water-insoluble inorganic particles. Therefore, the method for producing a water-absorbent resin of the present invention preferably further includes a step of adding water-insoluble inorganic particles. When the water-absorbent resin contains the water-insoluble inorganic particles, moisture absorption fluidity can be improved. In addition, the addition of the water-insoluble inorganic particles can improve the absorption amount of the absorbent article. Examples of the water-insoluble inorganic particles include multi-metal compounds such as hydrotalcite, silicon dioxide (silica), aluminum hydroxide, titanium dioxide, aluminum oxide, magnesium oxide, zinc oxide, talc, metal phosphates (for example, calcium phosphates such as tricalcium phosphate, barium phosphate, and aluminum phosphate), metal borates (for example, titanium borate, aluminum borate, iron borate, magnesium borate, manganese borate, and calcium borate), silicic acid or salts thereof, clay, diatomaceous earth, zeolite, bentonite, kaolin, and activated clay.

An amount of the water-insoluble inorganic particles used (the total amount used when a plurality of the water-insoluble inorganic particles are used) is preferably 0.01 parts by mass or more and 10 parts by mass or less, and more preferably 0.01 parts by mass or more and 5 parts by mass or less, with respect to 100 parts by mass of the surface-crosslinked water-absorbent resin.

A material obtained by adding the water-insoluble inorganic particles to the surface-crosslinked water-absorbent resin (water-absorbent resin particles) is also referred to as water-absorbing agent.

In one embodiment of the present invention, when the regenerated water-absorbent resin (C) is incorporated in the "preparation step of Aqueous Monomer Solution", the regenerated water-absorbent resin (C) may be mixed with the aqueous monomer solution, or the regenerated water-absorbent resin (C) may be mixed with water in advance, and then the monomer may be mixed.

In one embodiment of the present invention, when the regenerated water-absorbent resin (C) is incorporated in the "polymerization step", the regenerated water-absorbent resin (C) may be mixed before the start of polymerization or may be mixed after the start of polymerization.

In one embodiment of the present invention, when the regenerated water-absorbent resin (C) is added in the "gel grinding step", the regenerated water-absorbent resin (C) may be mixed before the start of grinding or may be mixed in the middle of grinding. Further, the regenerated water-absorbent resin (C) may be further divided and charged, and mixed. By mixing the regenerated water-absorbent resin (C) before grinding, the regenerated water-absorbent resin (C) and the hydrogel are ground together.

In one embodiment of the present invention, when the regenerated water-absorbent resin (C) is incorporated in the "Drying Step (Pulverizing Step and Classification Step)", the hydrogel and the regenerated water-absorbent resin (C) may be mixed before drying, or the water-absorbent resin powder and the regenerated water-absorbent resin (C) may be mixed after drying (pulverizing and classification) of the hydrogel.

In one embodiment of the present invention, when the regenerated water-absorbent resin (C) is incorporated in the "fine powder granulation step", the regenerated water-absorbent resin (C) may be mixed before granulation of the fine powder, or the fine powder and the regenerated water-absorbent resin (C) may be mixed and granulated.

In one embodiment of the present invention, when the regenerated water-absorbent resin (C) is incorporated in the "surface crosslinking step", the water-absorbent resin particles and the regenerated water-absorbent resin (C) may be mixed and surface-treated, or the water-absorbent resin particles may be surface-treated and mixed with the regenerated water-absorbent resin (C).

<2> Water-Absorbent Resin

In one aspect of the present invention, there is provided a water-absorbent resin obtained by incorporating: a regenerated water-absorbent resin (C) having less than 80 mass% of a water-soluble component, the regenerated water-absorbent resin (C) being obtained by mixing a water-absorbent resin decomposition product (A) having 80 mass% or more of a water-soluble component, the water-absorbent resin decomposition product (A) being obtained by decomposing a recovered water-absorbent resin, and a crosslinking agent (B) capable of reacting with the water-absorbent resin decomposition product (A); and a water-absorbent resin (D), which is a water-absorbent resin other than the recovered water-absorbent resin, in which a water-soluble content of the regenerated water-absorbent resin (C) has a mass average molecular weight of 50000 or more and 700000 or less.

The above description applies to the explanation of "the water-absorbent resin decomposition product (A) having 80 mass% or more of a water-soluble component obtained by decomposing the recovered water-absorbent resin", the explanation of "mixing with a crosslinking agent (B) capable of reacting with the water-absorbent resin decomposition product (A)", the explanation of "the regenerated water-absorbent resin (C) having less than 80 mass% of a water-soluble component", and the explanation of "incorporating a regenerated water-absorbent resin (C) and a water-absorbent resin (D)". Further, with regard to the description that "a water-soluble content of the regenerated water-absorbent resin (C) has a mass average molecular weight of 50000 or more and 700000 or less", the regenerated water-absorbent resin (C) is obtained by mixing and reacting the water-absorbent resin decomposition product (A) and the crosslinking agent (B), while an unreacted product may remain as the water-soluble content. The mass average molecular weight of the water-soluble content as the unreacted product may be the same as the mass average molecular weight of the water-soluble content of the water-absorbent resin decomposition product (A), and therefore, the description given above for the mass average molecular weight of the water-soluble content of the water-absorbent resin decomposition product (A) is applied to the explanation thereof.

In one embodiment of the present invention, the regenerated water-absorbent resin (C) has a water-soluble component (water-soluble content) amount of 75 mass% or less, 70 mass% or less, 65 mass% or less, 60 mass% or less, 55 mass% or less, 45 mass% or less, 40 mass% or less, 35 mass% or less, 30 mass% or less, or 25 mass% or less. In one embodiment of the present invention, the water-soluble component (water-soluble content) amount of the regenerated water-absorbent resin (C) is, for example, 1 mass% or more, 5 mass% or more, 10 mass% or more, or 15 mass% or more.

In one embodiment of the present invention, the water-absorbent resin contains the regenerated water-absorbent resin (C) and the water-absorbent resin (D). The above description is applied to the explanation of "contains the regenerated water-absorbent resin (C) and the water-absorbent resin (D)".

In one embodiment of the present invention, the water-soluble content amount of the water-absorbent resin is 30 mass% or less, 25 mass% or less, or 20 mass% or less. The method for measuring the water-soluble content amount will be described later.

In one embodiment of the present invention, the proportion of the regenerated water-absorbent resin (C) in the whole water-absorbent resin raw materials is not particularly limited, but is 1 mass% or more and 60 mass% or less, preferably 1 mass% or more and 50 mass% or less, more preferably 1 mass% or more and 40 mass% or less, and still more preferably 1 mass% or more and 30 mass% or less.

In one embodiment of the present invention, a YI value of the water-absorbent resin is 20 or less, 17 or less, 15 or less, or 13 or less. In one embodiment of the present invention, the YI value of the water-absorbent resin is 1 or more.

In one embodiment of the present invention, the residual monomer amount in the water-absorbent resin is 1000 mass ppm or less, 500 mass ppm or less, or 300 mass ppm or less. In one embodiment of the present invention, the residual monomer amount in the water-absorbent resin may be practically 50 mass ppm or more.

The water-absorbent resin according to an aspect of the present invention includes a regenerated water-absorbent resin obtained by crosslinking a water-soluble water-absorbent resin decomposition product. Therefore, the gel permeation rate of the water-absorbent resin is less likely to decrease.

In one embodiment of the present invention, the gel permeation rate (GPR) of the water-absorbent resin is 30 g/min or more, 35 g/min or more, 40 g/min or more, 45 g/min or more, 50 g/min or more, 55 g/min or more, 60 g/min or more, 65 g/min or more, 70 g/min or more, 75 g/min or more, 80 g/min or more, or 85 g/min or more. In one embodiment of the present invention, the gel permeation rate (GPR) of the water-absorbent resin is 800 g/min or less, 600 g/min or less, or 400 g/min or less.

In one embodiment of the present invention, the CRC is 25 g/g or more, 27 g/g or more, or 30 g/g or more, as a water absorption property of the water-absorbent resin. In one embodiment of the present invention, the CRC is 60 g/g or less, or 50 g/g or less, as a water absorption property of the water-absorbent resin.

In one embodiment of the present invention, the absorption capacity under pressure (AAP 2.1 kPa) of the water-absorbent resin is 25 g/g or more, 26 g/g or more, 28 g/g or more, or 30 g/g or more. In one embodiment of the present invention, the absorption capacity under pressure (AAP 2.1 kPa) of the water-absorbent resin is 40 g/g or less, or 35 g/g or less.

In one embodiment of the present invention, a water-absorbent resin produced by the production method of the present invention is also provided.

The present invention is not limited to each embodiment described above, and it may be changed in various ways within the scope of the claims. Thus, an embodiment achieved by appropriately combining technical means described herein with different embodiments will be included in the technical scope of the present invention.

The present invention includes the following aspects and forms.

1. A method for producing a water-absorbent resin, including: a step of obtaining a water-absorbent resin decomposition product (A) having 90 mass% or more of a water-soluble component, the step including decomposing a recovered water-absorbent resin; and a step of obtaining a regenerated water-absorbent resin (C) having 50 mass% or less of a water-soluble component, the step including mixing the water-absorbent resin decomposition product (A) with a crosslinking agent (B) capable of reacting with the water-absorbent resin decomposition product (A), in which a water-soluble content of the water-absorbent resin decomposition product (A) has a mass average molecular weight of 50000 or more and 700000 or less and a molecular weight distribution of 2.0 or more and 5.0 or less.

2. The production method according to 1, in which a main component of the water-absorbent resin decomposition product (A) is polyacrylic acid (salt).

3. The production method according to 1 or 2, in which the crosslinking agent (B) contains a compound having in one molecule, two or more functional groups capable of reacting with a carboxyl group.

4. The production method according to 3, in which the functional groups are epoxy groups.

5. The production method according to any of 1 to 4, in which a mixture of the water-absorbent resin decomposition product (A) and the crosslinking agent (B) is heated to 40°C or higher.

6. The production method according to any of 1 to 5, in which an amount of the water-soluble component of the regenerated water-absorbent resin (C) is 40 mass% or less.

7. The production method according to any of 1 to 6, in which the water-absorbent resin decomposition product (A) is a product of decomposition by a peroxide.

8. The production method according to any of 1 to 7, which includes incorporating the regenerated water-absorbent resin (C) and a water-absorbent resin (D), which is a water-absorbent resin other than the recovered water-absorbent resin.

9. The production method according to any of 1 to 8, in which the recovered water-absorbent resin is recovered from a spent water-absorbent article.

10. A water-absorbent resin including: a water-absorbent resin decomposition product (A) having 90 mass% or more of a water-soluble component, the water-absorbent resin decomposition product (A) being obtained by decomposing a recovered water-absorbent resin; and a regenerated water-absorbent resin (C) having 50 mass% or less of a water-soluble component, the regenerated water-absorbent resin (C) being obtained by mixing the water-absorbent resin decomposition product (A) and a crosslinking agent (B) capable of reacting with the water-absorbent resin decomposition product (A), in which a water-soluble content of the regenerated water-absorbent resin (C) has a mass average molecular weight of 50000 or more and 700000 or less.

11. The water-absorbent resin according to 10, in which a water-soluble content of the water-absorbent resin decomposition product (A) has a mass average molecular weight of 50000 or more and 700000 or less.

12. The water-absorbent resin according to 10 or 11, in which the water-soluble content of the water-absorbent resin decomposition product (A) has a molecular weight distribution of 2.0 or more and 5.0 or less.

13. The water-absorbent resin according to any of 10 to 12, in which an amount of the water-soluble component of the regenerated water-absorbent resin (C) is 40 mass% or less.

14. The water-absorbent resin according to any of 10 to 13, which contains the regenerated water-absorbent resin (C) and a water-absorbent resin (D) which is a water-absorbent resin other than the recovered water-absorbent resin.

15. The water-absorbent resin according to any of 10 to 14, in which an amount of the water-soluble content is 30 mass% or less.

16. The water-absorbent resin according to any of 10 to 15, in which a YI value is 20 or less.

17. The water-absorbent resin according to any of 10 to 16, in which a residual monomer amount is 500 mass ppm or less.

18. The water-absorbent resin according to any of 10 to 17, in which an absorption capacity under pressure (AAP 2.1 kPa) is 25 g/g or more.

19. A water-absorbent resin obtained by the production method described in any one of 1 to 9.

Examples

The present invention will be described more specifically according to the following Examples and Comparative Examples, but the present invention is not limited thereto. Examples obtained by appropriately combining the technical means disclosed in each Example are also included in the scope of the present invention. Unless otherwise noted, measurement was performed under conditions of room temperature (20°C or higher and 25°C or lower) and a relative humidity of 50 $\pm$ 5% RH. In addition, for convenience, "liter" is sometimes denoted as "1" or "L".

Evaluation Methods

(a) Gel Permeation Rate (GPR)

The measurement was performed by the following procedure with reference to the saline flow conductivity (SFC) test described in US 5849405 B, except that the measurement conditions were changed. The apparatus diagram and the like were referred to JP 2022-23984 A. Using the apparatus shown in FIG. 1, 0.900 g of a water-absorbent resin uniformly placed in a container 40 was swollen in a 0.90 mass% aqueous sodium chloride solution for 60 minutes without pressurization to obtain a swollen gel 44.

Next, a piston 46 was placed on the swollen gel 44, and a 0.90 mass% aqueous sodium chloride solution 33 was passed from a tank 31 to the swollen gel layer at a constant hydrostatic pressure (3923 dyne/cm$^2$) under a pressure of 0.3 psi (2.07 kPa). The GPR test was performed at room temperature (from 20 to 25°C). Using a computer and a top-loading balance 49, the amount of liquid passing through the gel layer was recorded as a function of time at 5 second intervals for 3 minutes. Flow rates for a period from the time when 1 minute elapsed to the time when 3 minutes elapsed after the start of flow of the liquid were averaged, and the average was determined as the value of the gel permeation rate (GPR) in the unit of g/min.

In the apparatus shown in FIG. 1, a glass pipe 32 was inserted into the tank 31, and the lower end of the glass pipe 32 was disposed in such a manner that the 0.90 mass% aqueous sodium chloride solution 33 could be maintained at a height of 5 cm above the bottom of the swollen gel 44 in a cell 41. The 0.90 mass% aqueous sodium chloride solution 33 in the tank 31 was supplied to the cell 41 through an L-shaped pipe 34 equipped with a cock 35. A collecting container 48 for collecting the liquid that passed through the cell 41 was disposed below the cell 41, and the collecting container 48 was installed on the top-loading balance 49. The inside diameter of the cell 41 was 6 cm, and a No. 400 stainless steel wire mesh (mesh size: 38 μm) 42 was installed on the bottom surface of the lower portion. The piston 46 had a hole 47 in its lower portion, which was large enough to allow the liquid to pass through, and a No. 400 stainless steel wire mesh (mesh size: 38 μm) 45 having good permeability was attached to the bottom of the piston 46 so that the water-absorbent resin or the swollen gel 44 thereof did not enter the hole 47. The cell 41 was placed on a table for placing the cell, and the surface of the table in contact with the cell was placed on a stainless steel wire mesh 43 that did not prevent permeation of the liquid.

(b) CRC

"CRC" is an abbreviation of "centrifuge retention capacity", and the CRC of the water-absorbent resin indicates an absorption capacity without pressure (unit: g/g) of the water-absorbent resin with respect to a 0.90 mass% aqueous sodium chloride solution for 30 minutes.

A water-absorbent resin (0.200 g) was uniformly placed in a bag (85 mm × 60 mm) made of a nonwoven fabric (trade name: Heatron Paper, model: GSP-22, available from Nangoku Pulp Industry Co., Ltd.), heat-sealed, and then immersed in a large excess (typically about 500 ml) of a 0.90 mass% aqueous sodium chloride solution at room temperature. After the lapse of 30 minutes, the bag was removed from the solution and drained for 3 minutes using a centrifuge (available from Kokusan Co., Ltd., centrifuge model H-122) at the centrifugal force (250 G) described in EDANA ABSORBENCY II 441.1-99, after which the mass W1 (g) of the bag was measured. In addition, the same operation was performed without using the water-absorbent resin, and the mass W0 (g) at that time was measured. From these masses W1 and W0, the CRC (centrifuge retention capacity) was calculated according to Equation (1) described below. "EDANA" is an abbreviation of European Disposables and Nonwovens Associations.

[Math. 1]

$$\mathrm{CRC\ (g/g) = (W1 - W0)/(Mass\ Of\ Water\text{-}Absorbent\ Resin) - 1} \cdots \mathrm{Equation\ (1)}$$

(c) AAP 0.3

"AAP" is an abbreviation of "absorption against pressure", and the AAP of the water-absorbent resin indicates the absorption capacity under pressure (unit: g/g) with respect to a 0.90 mass% aqueous sodium chloride solution.

AAP 0.3 was measured in accordance with NWSP 242.0.R2 (15) except that the pressurization condition was changed from 0.7 psi to 0.3 psi. Specifically, 0.9 g of a water-absorbing agent composition was swollen under pressure of 2.07 kPa (2.1 kPa) (21 g/cm$^2$, 0.3 psi) for 1 hour using a large excess of 0.9 mass% aqueous sodium chloride solution, and then AAP (absorption capacity under pressure) was measured. "NWSP" is an abbreviation of "Non-Woven Standard Procedures - Edition 2015".

(d) Mass Average Particle Size (D50), and Logarithmic Standard Deviation (σζ) of Particle Size Distribution

The mass average particle size (D50) and the logarithmic standard deviation (σ ζ) of the particle size distribution were measured with a vibration classifier (power source: 60 Hz) by the same method as the method described in (3) Mass Average Particle Size (D50) and Logarithmic Standard Deviation of Particle Size Distribution in columns 27 and 28 of US 7638570 B.

(e) Evaluation of Coloring of Decomposition Product and Water-Absorbent Resin (Yellowness/YI Value)

Evaluation of coloring of the decomposition products and water-absorbent resins was performed using a spectrophotometer, Spectrophotometer SE7700, available from Nippon Denshoku Industries Co., Ltd. As setting conditions for the measurement, transmission measurement was selected, a square cell (optical path: 10 mm) as an accessory was used, and pure water for industrial use was used for standard fairness. Specifically, a square cell was filled with about 16 g of an aqueous decomposition product solution (decomposition product concentration: 10 mass%) or a water-absorbent resin, and the sample was placed in a sample holder in a permeate sample chamber. The YI value (Yellow Index) was measured with the spectrophotometer under conditions of room temperature (from 20°C to 25°C) and a humidity of from 40 RH% to 50 RH%.

(f) Molecular Weight of Decomposition Product

The molecular weight of the decomposition product was measured according to the following procedure.

Preparation of measurement sample

A sample of the decomposition product was dissolved in the following solvent to prepare a solution having a concentration of 0.1 mass%. Thereafter, the resulting solution was passed through a filter (GL chromatography disk available from GL Sciences Inc., water base 25A, pore diameter 0.2 $\mu$m) to produce a measurement sample. Solvent: Aqueous solution containing 60 mM of sodium dihydrogen phosphate dihydrate, 20 mM of disodium hydrogen phosphate dodecahydrate, and 400 mass ppm of sodium azide (pH 6.35 to 6.38) This measurement sample was used to perform GPC measurement under the following measurement conditions.

Measurement conditions for GPC measurement

GPC measurement on the measurement sample was performed using Viscotek TDAmax available from Malvern Instruments Ltd. The measurement apparatus was equipped with a size exclusion chromatography, a refractive index detector, a light scattering detector, and a capillary viscometer. The measurement apparatus and measurement conditions were as follows.

Pump autosampler: Viscotek GPCmax (available from Malvern Instruments Ltd)
Guard column: OHpak SB-G (available from Showa Denko K.K.)
Column: Two columns of OHpak SB-806MHQ (available from Showa Denko K.K.) connected in series
Detector: Viscotek TDAmax (available from Malvern Instruments Ltd.)
Solvent: Aqueous solution containing 60 mM of sodium dihydrogen phosphate dihydrate, 20 mM of disodium hydrogen phosphate dodecahydrate, and 400 mass ppm of sodium azide (pH 6.35 to 6.38)
Flow rate: 0.5 mL/min
Injection volume: 100 $\mu$L

Pure water from which impurities were sufficiently removed was used as the water used in the GPC measurement. The GPC measurement included allowing a sufficient amount of solvent to flow through the measurement apparatus, and was performed in a state where the baseline of the detection value was stable, in particular, in a state where there was no noise peak in the light scattering detector.

Calibration of the measurement apparatus was performed using polyoxyethylene glycol [mass average molecular weight (Mw): 21966, molecular weight distribution (Mw/Mn): 1.0, differential refractive index (dn/dc): 0.132, solvent refractive index: 1.33] as a standard sample. The measurement was performed with the differential refractive index (dn/dc) of the water-soluble polymer to be measured set to 0.12 and the solvent refractive index set to 1.33. Data collection and analysis of refractive index, light scattering intensity, and viscosity were performed using Viscotek OmniSEC4.7.0 (trade name) software.

After the measurement, the mass average molecular weight (Mw), the number average molecular weight (Mn), and the molecular weight distribution (Mw/Mn) of the water-soluble content (water-soluble polymer) were calculated using the refractive index (RI) and the light scattering intensity (angle: 7°) (LALS), and data obtained from a viscometer (DP).

(g) Residual hydrogen peroxide amount

The residual hydrogen peroxide amount in the aqueous decomposition product solution was calculated by coloring the residual hydrogen peroxide with titanium sulfate as a coloring reagent and measuring the absorbance thereof according to the following procedure. Specifically, 0.50 g of an aqueous decomposition product solution, 8.5 g of pure water for industrial use, and 1.0 g of a 10 mass% aqueous calcium chloride solution were added and mixed to precipitate a decomposition product, and the mixture was filtered with a 0.2-$\mu$m chromatography disk. After addition and mixing of 0.30 g of 1 mol/L (2N) sulfuric acid to/with the filtrate, the mixture was colored with 0.10 g of 30 mass% titanium (IV) sulfate. The absorbance was measured using a ratio-beam spectrophotometer U-5100 (available from Hitachi High-Tech Corporation), a 10-mm square cell attached thereto, and pure water for industrial use as a standard. The absorbance at a wavelength of 410 nm was measured with the spectrophotometer. On the other hand, a calibration curve sample having a known hydrogen peroxide concentration was similarly reacted with titanium (IV) sulfate to prepare a calibration curve of hydrogen peroxide amount-absorbance, and the "residual hydrogen peroxide amount in the aqueous decomposition product solution" was calculated from the calibration curve.

(h) Residual Monomer

The residual monomer was measured in accordance with the EDANA method (ERT410.2-02).

(i-1) Measurement of Water-Soluble Content Amount (16-Hour Value) of Water-Absorbent Resin (Including Regenerated Water-Absorbent Resin (C))

Into a 250-ml volume plastic container with a lid, 184.3 g of a 0.90 mass% aqueous sodium chloride solution was weighed, and 1.00 g of a water-absorbent resin was added to the aqueous solution and stirred for 16 hours to extract a water-soluble component in the resin. The extract liquid was filtered through a sheet of filter paper (ADVANTEC Toyo Kaisha, Ltd., product name: (JIS P 3801, No. 2), thickness: 0.26 mm, retained particle size: 5 $\mu$m), and 50.0 g of the obtained filtrate was used as a liquid for measurement.

Next, the liquid for measurement was titrated with a 0.1 N-NaOH aqueous solution until the pH reached 10, and then titrated with a 0.1 N-HCl aqueous solution until the pH reached 2.7. The titers at this time were determined as [NaOH] ml and [HCl] ml, respectively.

In addition, the same operation was performed using only 184.3 g of a 0.90 mass% aqueous sodium chloride solution without adding a water-absorbent resin, and blank titers ([bNaOH] ml, [bHCl] ml) were determined.

When the water-absorbent resin is composed of known amounts of acrylic acid and a salt thereof, the water-soluble content amount (unit: mass%) in the water-absorbent resin can be calculated by Equation (2) described below based on the average molecular weight of the monomer and the titers obtained by the above operation.

[Math. 2]

Equation (2):

Water-Soluble Content Amount (mass%)

$= 0.1 \times$ (Average Molecular Weight Of Monomer) $\times 184.3 \times 100 \times$([HCl] $-$ [bHCl])/1000/1.0/50.0

(i-2) Mass Percentage of Water-Soluble Component of Decomposition Product

The mass percentage (mass%) of the water-soluble component in the decomposition product was determined by performing the same operation as in the method in (i-1) except that 1.00 g (solid content) of a decomposition product was used instead of 1.00 g of the water-absorbent resin.

Method for Producing Spent Water-Absorbent Resin (1)

The water-absorbent resins were taken out from: Pampers Dry Care Pants (Lot 20652022R0 00:34 20220306), Mamy Poko Pants (Lot 20220222 3113), Merries First Premium Pants (Lot UOE32551 20210912 3868HODG), Napier Gentle Premium Genki! Pants (Lot 202201233C0293), Whito pants (12-hour type) (Lot 2107113A 4827), and GOO.N Plus Skin Comfort Design Pants (Lot 20220114061000), respectively, purchased in April 2022.

A mixture of these taken-out water-absorbent resins was put in a beaker in an amount of 20 parts by mass, and 600 parts by mass of human urine was added thereto. Thereafter, the resultant was left to stand for 24 hours, thereby producing a spent water-absorbent resin. To the spent water-absorbent resin, 2000 parts by mass of ion-exchanged water was added, and the mixture was stirred for 15 minutes to perform a water washing operation. This operation was repeated twice. Subsequently, the content of the beaker was filtered through a 100-mesh stainless steel wire mesh, and the filtered product was returned to the beaker. Into the beaker, 2000 parts by mass of acetone was added, and the mixture was stirred for 15 minutes to perform a dehydration operation. Subsequently, the content of the beaker was filtered through a 100-mesh stainless steel wire mesh, the filtered product was then put into the beaker again, 2000 parts by mass of acetone was added thereto, and the mixture was stirred for 15 minutes to perform washing. The content of the beaker was filtered through a 100-mesh stainless steel wire mesh, and then the filtered product was dried at 150°C for 3 hours. Next, the dried product was ground using a roll mill, and further passed through a JIS standard sieve having a mesh size of 850 $\mu$m, to obtain a spent water-absorbent resin (1). The spent water-absorbent resin (1) had a water content percentage of 5 mass%.

Decomposition Example 1

In a reaction vessel, 50 g of the spent water-absorbent resin (1), 150 g of water, 70 g of a 15 mass% aqueous sodium carbonate solution (amount sufficient to adjust the pH of the mixture from 8.0 to 8.5) as a pH adjuster, and 6.65 g of a 30 mass% aqueous hydrogen peroxide solution as a decomposing agent were added and mixed.

Subsequently, the reaction vessel containing the mixture was immersed in a thermostatic bath at 80°C, and a decomposition reaction was started. After 4 hours of immersion, no gel-like product was observed, it was confirmed that almost all of the spent water-absorbent resin (1) was decomposed and solubilized, and a decomposition product (1) was obtained.

Subsequently, to remove residual hydrogen peroxide in the aqueous solution, 38.4 g of a 15 mass% aqueous sodium carbonate solution was added, and the mixture was stirred for 3 hours while the temperature was retained to 25°C. The residual hydrogen peroxide amount in the aqueous solution was measured, and it was confirmed that hydrogen peroxide was not present. The solid content concentration of the aqueous solution of the decomposition product (1) thus obtained was 22 mass%, the amount of the water-soluble component was 100 mass%, the YI value was 3.1, the mass average molecular weight Mw of the water-soluble content was 190000, and the molecular weight distribution (Mw/Mn) was 2.9. The pH of the aqueous solution of the decomposition product (1) was measured with a pH measuring instrument (pH meter: LAQUA act D-71 available from Horiba, Ltd.), and the pH was 8.11.

Decomposition Example 2

An aqueous solution of a decomposition product (2) was obtained by performing the same operation as in Decomposition Example 1, except that 6.65 g of the 30 mass% aqueous hydrogen peroxide solution was changed to 9.98 g of the 30 mass% aqueous hydrogen peroxide solution and that the immersion time was changed to 3 hours in Decomposition Example 1 (the pH of the mixture was adjusted from 8.0 to 8.5). The solid content concentration of the aqueous solution of the decomposition product (2) thus obtained was 25 mass%, the amount of the water-soluble component was 99 mass%, the YI value was 6.9, the mass average molecular weight Mw of the water-soluble content was 340000, and the molecular weight distribution (Mw/Mn) was 3.5. The pH of the aqueous solution of the decomposition product (2) was measured with a pH measuring instrument (pH meter: LAQUA act D-71 available from Horiba, Ltd.), and the pH was 8.01.

Decomposition Example 3

To 100 g of the spent water-absorbent resin (1), 5.75 g of an 8.7 mass% aqueous hydrogen peroxide solution was uniformly added, and the mixture was heated at 190°C for 1 hour. The solid content concentration of the decomposition product (3) thus obtained was 92 mass%, the amount of the water-soluble component was 97 mass%, the YI value of the 10 mass% aqueous solution was 1.8, the mass average molecular weight Mw of the water-soluble content was 560000, and the molecular weight distribution (Mw/Mn) was 2.7. The pH of the 10 mass% aqueous solution of the decomposition product (3) was measured with a pH measuring instrument (pH meter: LAQUA act D-71 available from Horiba, Ltd.), and the pH was 6.2.

Decomposition Example 4

The spent water-absorbent resin (1) was ground until the particle size reached 90 $\mu$m or less, 17.25 g of an 8.7 mass% aqueous hydrogen peroxide solution was uniformly added to 300 g of the obtained fine particles, and the mixture was heated at 160°C for 1 hour. The solid content concentration of the decomposition product (4) thus obtained was 96 mass%, the amount of the water-soluble component was 85 mass%, the YI value of the 10 mass% aqueous solution was 1.2, the mass average molecular weight Mw of the water-soluble content was 600000, and the molecular weight distribution (Mw/Mn) was 4.1. The pH of the 10 mass% aqueous solution of the decomposition product (4) was measured with a pH measuring instrument (pH meter: LAQUA act D-71 available from Horiba, Ltd.), and the pH was 6.45.

Production Example 1

An aqueous monomer solution (1) containing 300 parts by mass of acrylic acid, 100 parts by mass of a 48 mass% aqueous sodium hydroxide solution, 0.50 parts by mass of polyethylene glycol diacrylate (average n number: 9), 16.4 parts by mass of a 0.1 mass% aqueous trisodium diethylenetriaminepentacetate solution, and 314.3 parts by mass of deionized water was prepared.

Next, 150.6 parts by mass of a 48 mass% aqueous sodium hydroxide solution was mixed with the aqueous monomer solution (1) whose temperature had been adjusted to 38°C. Next, 14.6 parts by mass of a 4 mass% aqueous sodium persulfate solution was mixed. Thereafter, the aqueous monomer solution (1) was charged into a flat-shaped polymerization machine so that the thickness reached 10 mm. Thereafter, polymerization was allowed to proceed (polymerization time: 3 minutes) to obtain a hydrogel (1).

The hydrogel (1) obtained above was gel-ground using a screw extruder to obtain a particulate hydrogel (1). The particulate hydrogel (1) was dried by passing hot air at 185°C for 30 minutes using a ventilation dryer to obtain a dried polymer (1). The dried polymer (1) obtained after drying was ground and classified using JIS standard sieves having mesh sizes of 710 $\mu$m and 175 $\mu$m to obtain water-absorbent resin powder (1) having an irregularly crushed shape.

The water-absorbent resin powder (1) had a mass average particle size (D50) of 348 $\mu$m, a logarithmic standard deviation ($\sigma \zeta$) of particle size distribution of 0.32, a CRC of 50.0 g/g, and a proportion of particles having a particle size of less than 150 $\mu$m (proportion of particles passing through a sieve having a mesh size of 150 $\mu$m) of 0.5 mass%.

Production Example 2

n-Heptane (500 mL) was added to a 1000-mL volume five-necked cylindrical round bottom flask equipped with a stirrer, a reflux condenser, a dropping funnel, a thermometer, and a nitrogen gas introduction tube. A sucrose fatty acid ester (0.92 g) [available from Mitsubishi Chemical Corporation, trade name: S-370] having an HLB of 3.0 as a surfactant was added to and dispersed in n-heptane, the temperature was raised to dissolve the surfactant, then the mixture was cooled to 55°C. To a 500-mL volume Erlenmeyer flask, 92 g of an 80 mass% aqueous acrylic acid solution was added. While cooling from the outside, 102.2 g of a 30 mass% aqueous sodium hydroxide solution was added dropwise to the Erlenmeyer flask to neutralize 75 mol% of the acrylic acid, and a partially neutralized product of the acrylic acid was prepared. Further, 50.2 g of water, 0.11 g of potassium persulfate as a polymerization initiator, and 9.2 mg of ethylene glycol diglycidyl ether as a crosslinking agent were added to prepare an aqueous monomer solution for first stage polymerization.
The total amount of the aqueous monomer solution for first stage polymerization was added to the five-necked cylindrical round bottom flask under stirring and dispersed. The inside of the system was sufficiently replaced with nitrogen gas, the temperature was then raised, the bath temperature was retained at 70°C, the polymerization reaction was carried out for 1 hour, and then the temperature was cooled to room temperature to obtain a polymerized slurry liquid. To another 500-mL volume Erlenmeyer flask, 119.1 g of an 80 mass% aqueous acrylic acid solution was added, 132.2 g of a 30 mass% aqueous sodium hydroxide solution was added dropwise while cooling, 75 mol% of the acrylic acid was neutralized, and 27.4 g of water, 0.14 g of potassium persulfate and 35.7 mg of ethylene glycol diglycidyl ether were added to prepare an aqueous monomer solution for second stage polymerization. The aqueous monomer solution was cooled in an ice water bath.
After the total amount of the aqueous monomer solution for second stage polymerization was added to the polymerized slurry liquid obtained above, the inside of the system was sufficiently replaced with nitrogen gas again, the temperature was then raised, the bath temperature was retained at 70°C, and the second stage polymerization reaction was carried out for 2 hours. After the completion of the polymerization reaction, only moisture was removed to the outside of the system from the hydrogel-like product dispersed in n-heptane by azeotropic distillation. To the obtained gel-like product, 8.44 g of a 2 mass% aqueous ethylene glycol diglycidyl ether solution was added, and moisture and n-heptane were further removed by distillation and dried to obtain a water-absorbent resin. Further, drying was performed at 100°C to set the water content percentage to 12 mass%. The spherical granulated particles thus obtained were used as water-absorbent resin granulated particles (2).

Example 1

To 100 parts by mass (solid content: 22 parts by mass) of an aqueous solution of the decomposition product (1) obtained in Decomposition Example 1, 0.44 parts by mass of ethylene glycol diglycidyl ether (Denacol EX-810, available from Nagase ChemteX Corporation, 2.0 mass% of the solid content was added) was added, and the mixture was uniformly mixed by mechanically stirring with an apparatus having a high shearing force, and then heated at 80°C for 3 hours.
The gel was finely ground, dried at 150°C for 1 hour, and then ground and sieved to obtain a regenerated water-absorbent resin (1) having a particle size of 850 $\mu$m or less. The regenerated water-absorbent resin (1) had a solid content of 95 mass%. The amount of the water-soluble component in the regenerated water-absorbent resin (1) is as shown in Table 1. The mass average molecular weight of the water-soluble component of the regenerated water-absorbent resin (1) was 230000.
An aqueous solution containing 0.03 parts by mass of ethylene glycol diglycidyl ether, 0.5 parts by mass of propylene glycol, and 3 parts by mass of water was uniformly mixed with a mixed powder obtained by uniformly mixing 10 parts by mass of the regenerated water-absorbent resin (1) and 90 parts by mass of the water-absorbent resin powder (1) obtained in Production Example 1 of water-absorbent resin, and the mixture was subjected to a heat treatment at 190°C until the CRC reached 38 g/g. The obtained surface-crosslinked water-absorbent resin was classified with JIS standard sieves having mesh sizes of 850 $\mu$m and 150 $\mu$m, and 0.3 parts by mass of silicon dioxide (trade name: AEROSIL 200, available from Nippon Aerosil Co., Ltd.) was uniformly added. Thus, a water-absorbent resin (1) containing the regenerated water-absorbent resin as a part of the raw material was obtained. The CRC, GPR, water-soluble content amount, YI value, and residual monomer amount of the water-absorbent resin (1) were as shown in Table 2.

Example 2

The same operation as in Example 1 was performed using an aqueous solution of the decomposition product (2) obtained in Decomposition Example 2. As a result, a regenerated water-absorbent resin (2) was obtained. The regenerated water-absorbent resin (2) had a solid content of 95 mass%. The amount of the water-soluble component in the regenerated water-absorbent resin (2) is as shown in Table 1. The mass average molecular weight of the water-soluble component of the regenerated water-absorbent resin (2) was 350000.

An aqueous solution containing 0.04 parts by mass of ethylene glycol diglycidyl ether, 1.5 parts by mass of propylene glycol, and 3.5 parts by mass of water was uniformly mixed with a mixed powder obtained by uniformly mixing 10 parts by mass of the regenerated water-absorbent resin (2) and 90 parts by mass of the water-absorbent resin powder (1) obtained in Production Example 1 of water-absorbent resin, and the mixture was subjected to a heat treatment at 100°C until the CRC reached 36 g/g. The obtained surface-crosslinked water-absorbent resin was classified with JIS standard sieves having mesh sizes of 850 μm and 150 μm, and 0.3 parts by mass of silicon dioxide (trade name: AEROSIL 200, available from Nippon Aerosil Co., Ltd.) was uniformly added. Thus, a water-absorbent resin (2) containing the regenerated water-absorbent resin as a part of the raw material was obtained. The CRC, GPR, water-soluble content amount, YI value, and residual monomer amount of the water-absorbent resin (2) were as shown in Table 2.

Example 3

The same operation as in Example 1 was performed using an aqueous solution (solid content: 20 mass%) obtained by dissolving the decomposition product (3) obtained in Decomposition Example 3 in water. As a result, a regenerated water-absorbent resin (3) was obtained. The regenerated water-absorbent resin (3) had a solid content of 94 mass%. The amount of the water-soluble component in the regenerated water-absorbent resin (3) is as shown in Table 1. The mass average molecular weight of the water-soluble component of the regenerated water-absorbent resin (3) was 560000.

An aqueous solution containing 0.04 parts by mass of ethylene glycol diglycidyl ether, 2.5 parts by mass of propylene glycol, 3.5 parts by mass of water, and 0.8 mass% of aluminum sulfate tetradeca- to octadeca-hydrate was uniformly mixed with a mixed powder obtained by uniformly mixing 10 parts by mass of the regenerated water-absorbent resin (3) and 90 parts by mass of the water-absorbent resin powder (1) obtained in Production Example 1 of water-absorbent resin, and the mixture was subjected to a heat treatment at 100°C until the CRC reached 36 g/g. The obtained surface-crosslinked water-absorbent resin was classified with JIS standard sieves having mesh sizes of 850 μm and 150 μm to obtain a water-absorbent resin (3) containing the regenerated water-absorbent resin as a part of the raw material. The CRC, GPR, water-soluble content amount, YI value, and residual monomer amount of the water-absorbent resin (3) were as shown in Table 2.

Example 4

The decomposition product (3) obtained in Decomposition Example 3 was ground to 150 μm or less, and an aqueous solution containing 2.0 parts by mass of ethylene glycol diglycidyl ether and 50 parts by mass of water was uniformly mixed with 100 parts by mass of the obtained fine particles. The mixture was heated at 100°C for 1 hour to obtain a regenerated water-absorbent resin (4). The regenerated water-absorbent resin (4) had a solid content of 65 mass%. The amount of the water-soluble component in the regenerated water-absorbent resin (4) is as shown in Table 1. The mass average molecular weight of the water-soluble component of the regenerated water-absorbent resin (4) was 610000. The regenerated water-absorbent resin (4) was a hydrogel, and 14 parts by mass of the solid content of the hydrogel and 86 parts by mass of the solid content of the hydrogel (1) obtained in Production Example 1 of water-absorbent resin were gel-ground using a screw extruder while being uniformly mixed by mechanical stirring, thereby obtaining a particulate hydrogel (4). The particulate hydrogel (4) was dried by passing hot air at 185°C for 30 minutes using a ventilation dryer to obtain a dried polymer (4). The dried polymer (4) obtained after drying was ground and classified using JIS standard sieves having mesh sizes of 850 μm and 150 μm to obtain a water-absorbent resin powder (4).

An aqueous solution containing 0.04 parts by mass of ethylene glycol diglycidyl ether, 0.3 parts by mass of ethylene carbonate, 0.5 parts by mass of propylene glycol, and 3.0 parts by mass of water was uniformly mixed with 100 parts by mass of the water-absorbent resin powder (4), and the mixture was subjected to a heat treatment at 190°C until the CRC reached 35 g/g. The obtained surface-crosslinked water-absorbent resin was classified with JIS standard sieves having mesh sizes of 850 μm and 150 μm, and 0.3 parts by mass of silicon dioxide (trade name: AEROSIL 200, available from Nippon Aerosil Co., Ltd.) was uniformly added. Thus, a water-absorbent resin (4) containing the regenerated water-absorbent resin as a part of the raw material was obtained. The CRC, GPR, water-soluble content amount, YI value, and residual monomer amount of the water-absorbent resin (4) were as shown in Table 2.

Example 5

To 100 parts by mass (solid content: 22 parts by mass) of an aqueous solution of the decomposition product (1) obtained in Decomposition Example 1, 0.44 parts by mass of ethylene glycol diglycidyl ether (Denacol EX-810, available from Nagase ChemteX Corporation, 2.0 mass% of the solid content was added) was added, and the mixture was uniformly mixed by mechanically stirring with an apparatus having a high shearing force, and then heated at 80°C for 1 hour under conditions where the mixture could be dispersed in cyclohexane and refluxed. The obtained gel was dried by azeotropic dehydration, cyclohexane was removed by filtration, and the gel was further dried at 150°C for 1 hour, followed by grinding and sieving to obtain a regenerated water-absorbent resin (5) having a particle size of 850 $\mu$m or less. The regenerated water-absorbent resin (5) had a solid content of 94 mass%. The amount of the water-soluble component in the regenerated water-absorbent resin (5) is as shown in Table 1. The mass average molecular weight of the water-soluble component of the regenerated water-absorbent resin (5) was 220000.

An aqueous solution containing 0.04 parts by mass of ethylene glycol diglycidyl ether, 1.5 parts by mass of propylene glycol, and 3.5 parts by mass of water was uniformly mixed with a mixed powder obtained by uniformly mixing 10 parts by mass of the regenerated water-absorbent resin (5) and 90 parts by mass of the water-absorbent resin powder (1) obtained in Production Example 1 of water-absorbent resin, and the mixture was subjected to a heat treatment at 80°C until the CRC reached 36 g/g. The obtained surface-crosslinked water-absorbent resin was classified with JIS standard sieves having mesh sizes of 850 $\mu$m and 150 $\mu$m, and 0.3 parts by mass of silicon dioxide (trade name: AEROSIL 200, available from Nippon Aerosil Co., Ltd.) was uniformly added. Thus, a water-absorbent resin (5) containing the regenerated water-absorbent resin as a part of the raw material was obtained. The CRC, GPR, water-soluble content amount, YI value, and residual monomer amount of the water-absorbent resin (5) were as shown in Table 2.

Example 6

An aqueous solution containing 0.26 parts by mass of ethylene glycol diglycidyl ether and 20 parts by mass of water was uniformly mixed with 100 parts by mass of the decomposition product (4) obtained in Decomposition Example 4. The mixture was heated at 100°C for 1 hour to obtain a regenerated water-absorbent resin (6). The solid content of the regenerated water-absorbent resin (6) was 86.1 mass%, and the amount of the water-soluble component was 45 mass%. The mass average molecular weight of the water-soluble component of the regenerated water-absorbent resin (6) was 600000.

Well mixed were 270 parts by mass of acrylic acid, 90.0 parts by mass of a 48 mass% aqueous sodium hydroxide solution, 0.50 parts by mass of polyethylene glycol diacrylate (average n number: 9), 34.8 parts by mass of the regenerated water-absorbent resin (6), 14.8 parts by mass of a 0.1 mass% aqueous trisodium diethylenetriaminepentacetate solution, and 320 parts by mass of deionized water, to prepare an aqueous monomer solution (6).

Next, 135.5 parts by mass of a 48 mass% aqueous sodium hydroxide solution was mixed with the aqueous monomer solution (6) whose temperature had been adjusted to 38°C. Next, 13.1 parts by mass of a 4 mass% aqueous sodium persulfate solution was mixed. Thereafter, the aqueous monomer solution (6) was charged into a flat-shaped polymerization machine so that the thickness reached 10 mm. Thereafter, polymerization was allowed to proceed (polymerization time: 3 minutes) to obtain a hydrogel (6).

The hydrogel (6) obtained above was gel-ground using a screw extruder to obtain a particulate hydrogel (6). The particulate hydrogel (6) was dried by passing hot air at 185°C for 30 minutes using a ventilation dryer to obtain a dried polymer (6). The dried polymer (6) obtained after drying was ground and classified using JIS standard sieves having mesh sizes of 710 $\mu$m and 175 $\mu$m to obtain water-absorbent resin powder (6) having an irregularly crushed shape.

An aqueous solution containing 0.04 parts by mass of ethylene glycol diglycidyl ether, 0.3 parts by mass of ethylene carbonate, 0.5 parts by mass of propylene glycol, and 3.0 parts by mass of water was uniformly mixed with 100 parts by mass of the water-absorbent resin powder (6), and the mixture was subjected to a heat treatment at 190°C until the CRC reached 35 g/g. The obtained surface-crosslinked water-absorbent resin was classified with JIS standard sieves having mesh sizes of 850 $\mu$m and 150 $\mu$m, and 0.3 parts by mass of silicon dioxide (trade name: AEROSIL 200, available from Nippon Aerosil Co., Ltd.) was uniformly added. Thus, a water-absorbent resin (6) containing the regenerated water-absorbent resin as a part of the raw material was obtained. The CRC, GPR, water-soluble content amount, YI value, and residual monomer amount of the water-absorbent resin (6) were as shown in Table 2.

Example 7

Using a screw extruder, 11.6 parts by mass (10.0 parts by mass in terms of solid content) of the regenerated water-absorbent resin (6) obtained in Example 6 and 216.3 parts by mass (90.0 parts by mass in terms of solid content) of the hydrogel (1) obtained in Production Example 1 were gel-ground while being uniformly mixed, to obtain a particulate hydrogel (7). The particulate hydrogel (7) was dried by passing hot air at 185°C for 30 minutes using a ventilation dryer to obtain a dried polymer (7). The dried polymer (7) obtained after drying was ground and classified using JIS standard sieves having mesh sizes of 850 $\mu$m and 150 $\mu$m to obtain a water-absorbent resin powder (7).

An aqueous solution containing 0.04 parts by mass of ethylene glycol diglycidyl ether, 0.3 parts by mass of ethylene carbonate, 0.5 parts by mass of propylene glycol, and 3.0 parts by mass of water was uniformly mixed with 100 parts by mass of the water-absorbent resin powder (7), and the mixture was subjected to a heat treatment at 190°C until the CRC reached 35 g/g. The obtained surface-crosslinked water-absorbent resin was classified with JIS standard sieves having mesh sizes of 850 μm and 150 μm, and 0.3 parts by mass of silicon dioxide (trade name: AEROSIL 200, available from Nippon Aerosil Co., Ltd.) was uniformly added. Thus, a water-absorbent resin (7) containing the regenerated water-absorbent resin as a part of the raw material was obtained. The CRC, GPR, water-soluble content amount, YI value, and residual monomer amount of the water-absorbent resin (7) were as shown in Table 2.

Example 8

After uniform mixing of 11.6 parts by mass (10.0 parts by mass in terms of solid content) of the regenerated water-absorbent resin (6) obtained in Example 6 with 212.8 parts by mass (90.0 parts by mass in terms of solid content) of the particulate hydrogel (1) obtained in Production Example 1, the mixture was dried by passing hot air at 185°C for 30 minutes using a ventilation dryer to obtain a dried polymer (8). The dried polymer (8) obtained after drying was ground and classified using JIS standard sieves having mesh sizes of 850 μm and 150 μm to obtain a water-absorbent resin powder (8).

An aqueous solution containing 0.04 parts by mass of ethylene glycol diglycidyl ether, 0.3 parts by mass of ethylene carbonate, 0.5 parts by mass of propylene glycol, and 3.0 parts by mass of water was uniformly mixed with 100 parts by mass of the water-absorbent resin powder (8), and the mixture was subjected to a heat treatment at 190°C until the CRC reached 35 g/g. The obtained surface-crosslinked water-absorbent resin was classified with JIS standard sieves having mesh sizes of 850 μm and 150 μm, and 0.3 parts by mass of silicon dioxide (trade name: AEROSIL 200, available from Nippon Aerosil Co., Ltd.) was uniformly added. Thus, a water-absorbent resin (8) containing the regenerated water-absorbent resin as a part of the raw material was obtained. The CRC, GPR, water-soluble content amount, YI value, and residual monomer amount of the water-absorbent resin (8) were as shown in Table 2.

Example 9 (Addition of Regenerated Water-Absorbent Resin Crosslinked in Two Stages in Surface Treatment Step)

After uniform mixing of an aqueous solution containing 0.13 parts by mass of ethylene glycol diglycidyl ether, 0.50 parts by mass of Obazolin LB-SF (available from Toho Chemical Industry Co., Ltd.), and 100 parts by mass of deionized water with 116 parts by mass (100 parts by mass in terms of solid content) of the regenerated water-absorbent resin (6) obtained in Example 6, the mixture was heated at 180°C for 1 hour, and the resultant product obtained was ground and classified using JIS standard sieves having mesh sizes of 850 μm and 150 μm, thereby obtaining a regenerated water-absorbent resin (9).

The solid content of the regenerated water-absorbent resin (9) was 97.8 mass%, and the amount of the water-soluble component was 24.3 mass%. The mass average molecular weight of the water-soluble component of the regenerated water-absorbent resin (9) was 560000. After well mixing 10.0 parts by mass (in terms of solid content) of the regenerated water-absorbent resin (9) and 90.0 parts by mass of the water-absorbent resin powder (1) obtained in Production Example (1), an aqueous solution containing 0.04 parts by mass of ethylene glycol diglycidyl ether, 0.3 parts by mass of ethylene carbonate, 0.5 parts by mass of propylene glycol, and 3.0 parts by mass of water was uniformly mixed, and the mixture was subjected to a heat treatment at 190°C until the CRC reached 35 g/g. The obtained surface-crosslinked water-absorbent resin was classified with JIS standard sieves having mesh sizes of 850 μm and 150 μm, and 0.3 parts by mass of silicon dioxide (trade name: AEROSIL 200, available from Nippon Aerosil Co., Ltd.) was uniformly added. Thus, a water-absorbent resin (9) containing the regenerated water-absorbent resin as a part of the raw material was obtained. The CRC, GPR, water-soluble content amount, YI value, and residual monomer amount of the water-absorbent resin (9) were as shown in Table 2.

Comparative Example 1

In a polypropylene container having a volume of 120 ml, 20.0 g of a 25 mass% aqueous sodium polyacrylate solution (DL522, available from Nippon Shokubai Co., Ltd., mass average molecular weight (Mw) of water-soluble content: 260000, molecular weight distribution (Mw/Mn): 5.2) was added to 0.111 g of ethylene glycol diglycidyl ether (Denacol EX-810, available from Nagase ChemteX Corporation), and the mixture was stirred with a spatula to dissolve ethylene glycol diglycidyl ether in the aqueous solution. Pack-Ace was then covered with a lid and allowed to stand for 3 hours to eliminate air bubbles in the solution. The polypropylene container was placed in an oven at 80°C and allowed to stand for 12 hours to obtain a gel. The gel was finely ground, dried, and then ground and sieved to obtain a comparative regenerated water-absorbent resin (1) of 850 μm or less. The amount of the water-soluble component in the comparative regenerated water-absorbent resin (1) is as shown in Table 1.

An aqueous solution containing 0.03 parts by mass of ethylene glycol diglycidyl ether, 0.5 parts by mass of propylene glycol, and 3 parts by mass of water was uniformly mixed with a mixed powder obtained by uniformly mixing 10 parts by mass of the comparative regenerated water-absorbent resin (1) and 90 parts by mass of the water-absorbent resin powder (1) obtained in Production Example 1 of water-absorbent resin, and the mixture was subjected to a heat treatment at 190°C until the CRC reached 38 g/g. The obtained surface-crosslinked water-absorbent resin was classified with JIS standard sieves having mesh sizes of 850 μm and 150 μm, and 0.3 parts by mass of silicon dioxide (trade name: AEROSIL 200, available from Nippon Aerosil Co., Ltd.) was uniformly added. Thus, a comparative water-absorbent resin (1) containing the regenerated water-absorbent resin as a part of the raw material was obtained. The CRC, GPR, water-soluble content amount, YI value, and residual monomer amount of the comparative water-absorbent resin (1) were as shown in Table 2.

[Table 1]

Table 1

|  | Decomposition product to be used | Water-soluble component [mass%] |
|---|---|---|
| Regenerated water-absorbent resin (1) | Decomposition product (1) | 26 |
| Regenerated water-absorbent resin (2) | Decomposition product (2) | 23 |
| Regenerated water-absorbent resin (3) | Decomposition product (3) | 20 |
| Regenerated water-absorbent resin (4) | Decomposition product (3) | 39 |
| Regenerated water-absorbent resin (5) | Decomposition product (1) | 28 |
| Regenerated water-absorbent resin (6) | Decomposition product (4) | 45 |
| Regenerated water-absorbent resin (9) | Decomposition product (4) | 24 |
| Comparative regenerated water-absorbent resin (1) | DL522 | 41 |

[Table 2]

Table 2

|  | Regenerated water-absorbent resin | CRC [g/g] | GPR [g/min.] | Water-soluble content amount [mass%] | YI value | Residual monome r amount [ppm] |
|---|---|---|---|---|---|---|
| Water-absorbent resin (1) | Regenerated water-absorbent resin (1) | 38 | 42 | 25 | 13 | 250 |
| Water-absorbent resin (2) | Regenerated water-absorbent resin (2) | 36 | 75 | 22 | 12 | 280 |
| Water-absorbent resin (3) | Regenerated water-absorbent resin (3) | 36 | 69 | 21 | 12 | 280 |
| Water-absorbent resin (4) | Regenerated water-absorbent resin (4) | 35 | 89 | 24 | 13 | 270 |
| Water-absorbent resin (5) | Regenerated water-absorbent resin (5) | 36 | 72 | 23 | 11 | 310 |
| Water-absorbent resin (6) | Regenerated water-absorbent resin (6) | 35 | 68 | 20 | 10 | 330 |
| Water-absorbent resin (7) | Regenerated water-absorbent resin (6) | 35 | 71 | 21 | 11 | 260 |
| Water-absorbent resin (8) | Regenerated water-absorbent resin (6) | 35 | 70 | 21 | 11 | 250 |

(continued)

| | Regenerated water-absorbent resin | CRC [g/g] | GPR [g/min.] | Water-soluble content amount [mass%] | YI value | Residual monome r amount [ppm] |
|---|---|---|---|---|---|---|
| Water-absorbent resin (9) | Regenerated water-absorbent resin (9) | 35 | 70 | 20 | 14 | 250 |
| Comparative water-absorbent resin (1) | Comparative regenerated water-absorbent resin (1) | 38 | 29 | 31 | 16 | 290 |

This application is based on Japanese Patent Application No. 2023-130231 filed on August 9, 2023, the entire disclosure of which is incorporated herein by reference.

**Claims**

1. A method for producing a water-absorbent resin, comprising:

   a step of obtaining a water-absorbent resin decomposition product (A) having 80 mass% or more of a water-soluble component, the step including decomposing a recovered water-absorbent resin;
   a step of obtaining a regenerated water-absorbent resin (C) having less than 80 mass% of a water-soluble component, the step including mixing the water-absorbent resin decomposition product (A) with a crosslinking agent (B) capable of reacting with the water-absorbent resin decomposition product (A); and
   incorporating the regenerated water-absorbent resin (C) and a water-absorbent resin (D), which is a water-absorbent resin other than the recovered water-absorbent resin,
   wherein a water-soluble content of the water-absorbent resin decomposition product (A) has a mass average molecular weight of 50000 or more and 700000 or less and a molecular weight distribution of 2.0 or more and 7.0 or less.

2. The production method according to claim 1, wherein a main component of the water-absorbent resin decomposition product (A) is polyacrylic acid (salt).

3. The production method according to claim 1 or 2, wherein the crosslinking agent (B) includes a compound having in one molecule, two or more functional groups capable of reacting with a carboxyl group.

4. The production method according to claim 3, wherein the functional groups are epoxy groups.

5. The production method according to any one of claims 1 to 4, wherein a mixture of the water-absorbent resin decomposition product (A) and the crosslinking agent (B) is heated to 40°C or higher.

6. The production method according to any one of claims 1 to 5, wherein an amount of the water-soluble component of the regenerated water-absorbent resin (C) is 70 mass% or less.

7. The production method according to any one of claims 1 to 6, wherein the water-absorbent resin decomposition product (A) is a product of decomposition by a peroxide.

8. The method for producing a water-absorbent resin according to any one of claims 1 to 7, wherein
   the step of obtaining a water-absorbent resin decomposition product (A) includes a heat treatment step of heat-treating a mixture (b) including the recovered water-absorbent resin, water, and a decomposing agent under conditions satisfying i) and ii) described below:

   i) a solid content concentration of the mixture is 60 mass% or more; and
   ii) a temperature of the heat treatment is 60°C or higher.

9. The production method according to any one of claims 1 to 8, wherein the recovered water-absorbent resin is recovered from a spent water-absorbent article.

10. A water-absorbent resin comprising: a regenerated water-absorbent resin (C) having less than 80 mass% of a water-soluble component, the regenerated water-absorbent resin (C) being obtained by mixing a water-absorbent resin decomposition product (A) having 80 mass% or more of a water-soluble component, the water-absorbent resin decomposition product (A) being obtained by decomposing a recovered water-absorbent resin, and a crosslinking agent (B) capable of reacting with the water-absorbent resin decomposition product (A); and a water-absorbent resin (D), which is a water-absorbent resin other than the recovered water-absorbent resin, wherein a water-soluble content of the regenerated water-absorbent resin (C) has a mass average molecular weight of 50000 or more and 700000 or less.

11. The water-absorbent resin according to claim 10, wherein a water-soluble content of the water-absorbent resin decomposition product (A) has a mass average molecular weight of 50000 or more and 700000 or less.

12. The water-absorbent resin according to claim 10 or 11, wherein the water-soluble content of the water-absorbent resin decomposition product (A) has a molecular weight distribution of 2.0 or more and 7.0 or less.

13. The water-absorbent resin according to any one of claims 10 to 12, wherein an amount of the water-soluble component of the regenerated water-absorbent resin (C) is 70 mass% or less.

14. The water-absorbent resin according to any one of claims 10 to 13, wherein an amount of the water-soluble content is 30 mass% or less.

15. The water-absorbent resin according to any one of claims 10 to 14, wherein a YI value is 20 or less.

16. The water-absorbent resin according to any one of claims 10 to 15, wherein a residual monomer amount is 500 mass ppm or less.

17. The water-absorbent resin according to any one of claims 10 to 16, wherein an absorption capacity under pressure (AAP 2.1 kPa) is 25 g/g or more.

18. A water-absorbent resin produced by the production method described in any one of claims 1 to 9.

FIG. 1

## INTERNATIONAL SEARCH REPORT

| International application No. |
| --- |
| **PCT/JP2024/022891** |

**A.    CLASSIFICATION OF SUBJECT MATTER**

*C08F 8/50*(2006.01)i; *C08F 2/22*(2006.01)i; *C08G 59/02*(2006.01)i; *C08J 3/24*(2006.01)i; *C08L 33/02*(2006.01)i; *C08L 101/14*(2006.01)i

FI:    C08F8/50; C08L33/02; C08L101/14; C08F2/22; C08G59/02; C08J3/24 Z CEY

According to International Patent Classification (IPC) or to both national classification and IPC

**B.    FIELDS SEARCHED**

Minimum documentation searched (classification system followed by classification symbols)

C08F; C08J3.11; C08L

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | US 2022/0267561 A1 (THE PROCTER & GAMBLE COMPANY) 25 August 2022 (2022-08-25)<br>    claims, paragraphs [0005], [0048], [0074], example 1 | 1-3, 5-18 |
| Y | | 4 |
| X | US 2022/0119618 A1 (THE PROCTER & GAMBLE COMPANY) 21 April 2022 (2022-04-21)<br>    claims, paragraphs [0005], [0010], [0028], [0031], [0052], [0053] | 1-18 |
| Y | | 4 |
| X | JP 2023-038963 A (SDP GLOBAL CO., LTD.) 20 March 2023 (2023-03-20)<br>    claims, paragraphs [0016], [0019], [0066], [0120] | 1-6, 9-18 |
| A | US 2021/0054165 A1 (THE PROCTER & GAMBLE COMPANY) 25 February 2021 (2021-02-25)<br>    entire text | 1-18 |

☐ Further documents are listed in the continuation of Box C.        ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 August 2024** | **27 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

| International application No. |
| --- |
| **PCT/JP2024/022891** |

| Patent document cited in search report | | | Publication date (day/month/year) | Patent family member(s) | | | Publication date (day/month/year) |
| --- | --- | --- | --- | --- | --- | --- | --- |
| US | 2022/0267561 | A1 | 25 August 2022 | EP | 4298157 | A1 | |
| | | | | CN | 116761842 | A | |
| US | 2022/0119618 | A1 | 21 April 2022 | EP | 4229122 | A1 | |
| | | | | CN | 116234865 | A | |
| JP | 2023-038963 | A | 20 March 2023 | (Family: none) | | | |
| US | 2021/0054165 | A1 | 25 February 2021 | EP | 3783055 | A1 | |
| | | | | CN | 114245811 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020213298 A
- WO 2022080342 A
- JP 4317785 A
- JP 5247221 A
- JP 2019 A
- JP 131789 A
- WO 2021042113 A
- JP 2017100133 A
- JP 11172039 A
- JP 2020049398 A
- US 4893999 B
- US 6241928 B
- US 2005215734 A
- US 6987151 B
- US 6710141 B
- WO 2009123197 A
- US 20080194863 A
- US 20050215734 A
- US 7265190 B
- US 4893999 A
- WO 2011126079 A
- WO 2006100300 A
- WO 2011025012 A
- WO 2011025013 A
- WO 2011111657 A
- US 7638570 B
- US 7183456 B
- US 5849405 A
- JP 2022023984 A
- JP 2023 A
- JP 130231 A